# EUROPEAN PATENT SPECIFICATION

(11) **EP 4 582 962 B1**
(45) Date of publication and mention of the grant of the patent: **25.02.2026**
(21) Application number: 24221778.4
(22) Date of filing: 19.12.2024
(51) Int. Cl.: G06F 13/16, G06F 11/16

(54) **PROCESSING SYSTEM, AND RELATED METHOD**
VERARBEITUNGSSYSTEM UND ZUGEHÖRIGES VERFAHREN
SYSTÈME DE TRAITEMENT ET PROCÉDÉ ASSOCIÉ

(30) Priority: 04.01.2024 IT 202400000057
(43) Date of publication of application: 09.07.2025
(73) Proprietor: STMicroelectronics International N.V., 1228 Plan-les-Ouates, Geneva (CH)
(72) Inventor: VITTORELLI, Boris, 83539 Pfaffing (DE); SHARMA, Vivek Mohan, 110076 New Delhi (IN); SIDDIKI, Mohammad Javed Raies, 201308 Greater Noida (IN); COLOMBO, Roberto, D-81829 München (DE); PAL, Arjun, 202002 Uttar Pradesh (IN)
(74) Representative: Buzzi, Notaro & Antonielli d'Oulx S.p.A.

(56) References cited:
- US-A- 5 249 187

## Description

### Technical Field

Embodiments of the present disclosure relate to processing systems comprising a memory controller for an external memory, such as an OctalSPI memory interface.

### Background

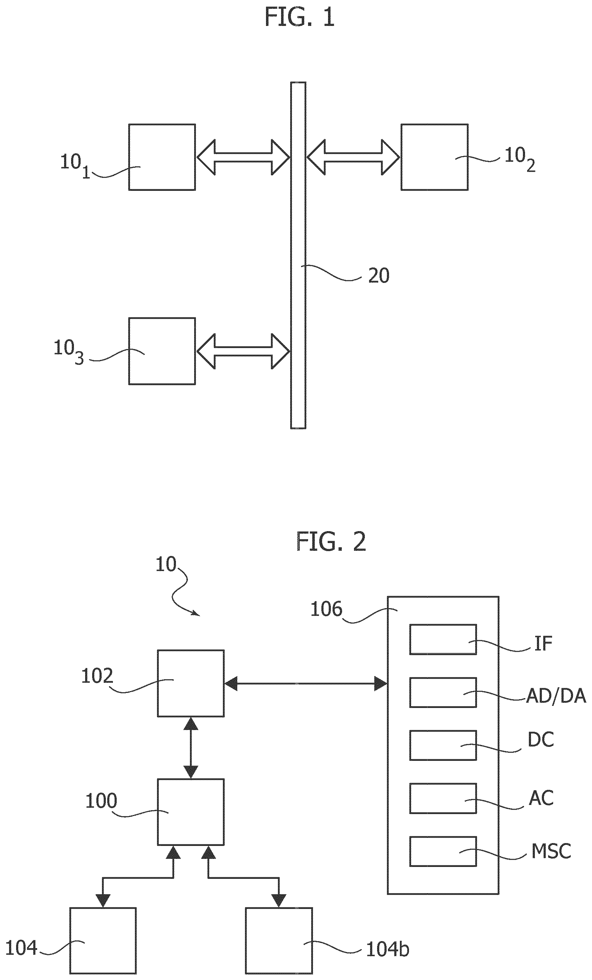

Figure 1 shows a typical electronic system, such as the electronic system of a vehicle, comprising a plurality of processing systems 10, such as embedded systems or integrated circuits, e.g., a Field Programmable Gate Array (FPGA), a Digital Signal Processor (DSP) or a micro-controller (e.g., dedicated to the automotive market).

For example, in Figure 1 are shown three processing systems 10₁, 10₂ and 10₃ connected through a suitable communication system 20. For example, the communication system may include a vehicle control bus, such as a Controller Area Network (CAN) bus, and possibly a multimedia bus, such as a Media Oriented Systems Transport (MOST) bus, connected to vehicle control bus via a gateway. Typically, the processing systems 10 are located at different positions of the vehicle and may include, e.g., an Engine Control Unit, a Transmission Control Unit (TCU), an Anti-lock Braking System (ABS), a Body Control Module (BCM), and/or a navigation and/or multimedia audio system. Accordingly, one or more of the processing systems 10 may also implement real-time control and regulation functions. These processing systems are usually identified as Electronic Control Units.

Figure 2 shows a block diagram of an exemplary digital processing system 10, such as a micro-controller, which may be used as any of the processing systems 10 of Figure 1.

In the example considered, the processing system 10 comprises a microprocessor 102, usually the Central Processing Unit (CPU), programmed via software instructions. Usually, the software executed by the microprocessor 102 is stored in a non-volatile program memory 104, such as a Flash memory or EEPROM. Thus, the memory 104 is configured to store the firmware of the processing unit 102, wherein the firmware includes the software instructions to be executed by the microprocessor 102. Generally, the non-volatile memory 104 may also be used to store other data, such as configuration data, e.g., calibration data.

The microprocessor 102 usually has associated also a volatile memory 104b, such as a Random-Access-Memory (RAM). For example, the memory 104b may be used to store temporary data.

As shown in Figure 2, usually the communication with the memories 104 and/or 104b is performed via one or more memory controllers 100. The memory controller(s) 100 may be integrated in the microprocessor 102 or connected to the microprocessor 102 via a communication channel, such as a system bus of the processing system 10. The memories 104 and/or 104b may be integrated with the microprocessor 102 in a single integrated circuit, or the memories 104 and/or 104b may be in the form of a separate integrated circuit and connected to the microprocessor 102, e.g., via the traces of a printed circuit board.

In the example considered, the microprocessor 102 may have associated one or more (hardware) resources/peripherals 106 selected from the group of:
- one or more communication interfaces IF, *e.g.,* for exchanging data via the communication system 20, such as a Universal asynchronous receiver/transmitter (UART), Serial Peripheral Interface Bus (SPI), Inter-Integrated Circuit (I²C), Controller Area Network (CAN) bus, and/or Ethernet interface, and/or a debug interface; and/or
- one or more analog-to-digital converters AD and/or digital-to-analog converters DA; and/or
- one or more dedicated digital components DC, such as hardware timers and/or counters, or a cryptographic co-processor; and/or
- one or more analog components AC, such as comparators, sensors, such as a temperature sensor, etc.; and/or
- one or more mixed signal components MSC, such as a PWM (Pulse-Width Modulation) driver.

Generally, a dedicated digital components DC may also correspond to a FPGA integrated in the processing system 10. For example, in this case, the memory 104 may also comprise the program data for such a FPGA.

Accordingly, the digital processing system 10 may support different functionalities. For example, the behavior of the microprocessor 102 is determined by the firmware stored in the memory 104, *e.g.,* the software instructions to be executed by a microprocessor 102 of a micro-controller 10. Thus, by installing a different firmware, the same hardware (micro-controller) can be used for different applications.

In this respect, future generation of such processing systems 10, *e.g.,* microcontrollers adapted to be used in automotive applications, are expected to exhibit an increase in complexity, mainly due to the increasing number of requested functionalities (new protocols, new features, etc.) and to the tight constraints of execution conditions (e.g., lower power consumption, increased calculation power and speed, etc.). In parallel to the growth in complexity, it is also requested a great flexibility in the micro-controller configuration in order to fit into one single product applications that were formerly allocated on separate processing systems 10.

For example, recently more complex multi-core processing systems 10 have been proposed. For example, such multi-core processing systems may be used to execute (in parallel) several of the processing systems 10 shown in Figure 1, such as several ECUs of a vehicle.

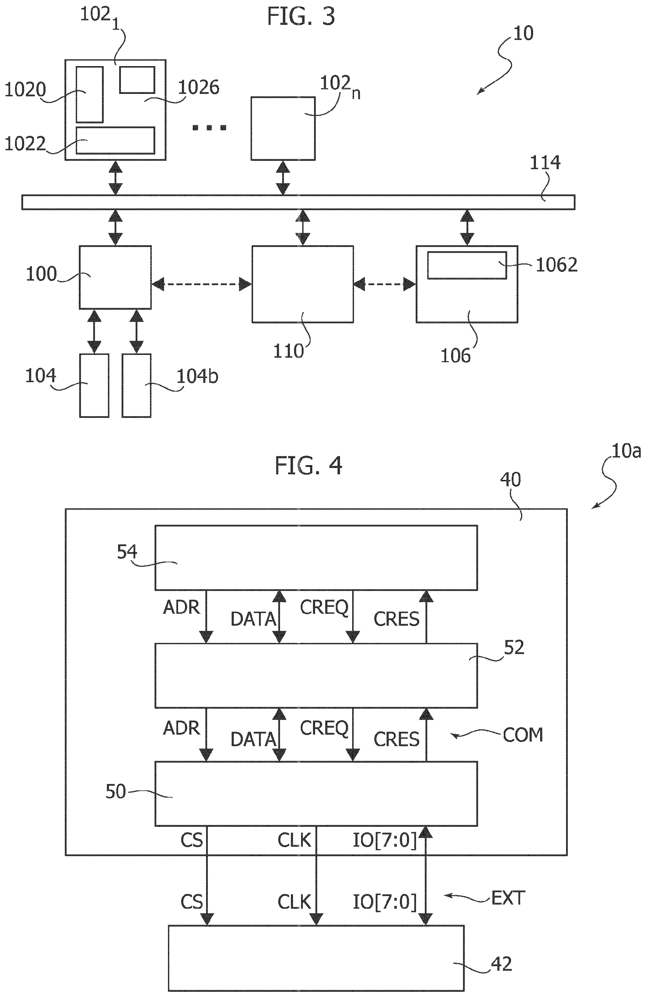

Figure 3 shows a further example of a processing system 10, such as a multi-core processing system 10. Specifically, in the example considered, the processing system 10 comprises a plurality of n processing cores 102₁... 102ₙ connected to a (on-chip) communication system 114. For example, in the context of real-time control systems, the processing cores 102₁...102ₙ may be ARM Cortex^{®}-R52 cores. Generally, the communication system 114 may comprise one or more bus systems, *e.g.,* based on the Advanced eXtensible Interface (AXI) bus architecture, and/or a Network-on-Chip (NoC).

For example, as shown at the example of the processing core 102₁, each processing core 102 may comprise a microprocessor 1020 and a communication interface 1022 configured to manage the communication between the microprocessor 1020 and the communication system 114. Typically, the interface 1022 is a master interface configured to forward a given (read or write) request from the microprocessor 1020 to the communication system 114, and forward an optional response from the communication system 114 to the microprocessor 1020. However, the communication interface 1022 may also comprise a slave interface. For example, in this way, a first microprocessor 1020 may send a request to a second microprocessor 1020 (via the communication interface 1022 of the first microprocessor, the communication system 114 and the communication interface 1022 of the second microprocessor). Generally, each processing core 102₁...102ₙ may also comprise further local resources, such as one or more local memories 1026, usually identified as Tightly Coupled Memory (TCM).

As mentioned before, typically the processing cores 102₁...102ₙ are arranged to exchange data with one or more non-volatile memory 104 and/or one or more volatile memory 104b. In a multi-core processing system 10, these memories are often system memories, *i.e.,* shared for the processing cores 102₁...102ₙ. As mentioned before, each processing core 102₁...102ₙ may, however, comprise one or more additional local memories 1026. For example, as shown in Figure 3, the processing system 10 may comprise one or more memory controllers 100 configured to connect at least one non-volatile memory 104 and at least one volatile memory 104b to the communication system 114.

As mentioned before, the processing system 10 may comprise one or more resources 106, such as one or more communication interfaces or co-processors (e.g., a cryptographic co-processor). The resources 106 are usually connected to the communication system 114 via a respective communication interface 1062, such as a peripheral bridge. For example, for this purpose, the communication system 114 may indeed comprise an Advanced Microcontroller Bus Architecture (AMBA) High-performance Bus (AHB), and an Advanced Peripheral Bus (APB) used to connect the resources/peripherals 106 to the AMBA AHB bus. In general, the communication interface 1062 comprises at least a slave interface. For example, in this way, a processing core 102 may send a request to a resource 106 and the resource returns given data. Generally, one or more of the communication interfaces 1062 may also comprise a respective master interface. For example, such a master interface, often identified as integrated Direct Memory Access (DMA) controller, may be useful in case the resource has to start a communication in order to exchange data via (read and/or write) request with another circuit connected to the communication system 114, such as a resource 106 or a processing core 102.

Often such processing systems 10 comprise also one or more general-purpose DMA controllers 110. For example, as shown in Figure 3, a DMA controller 110 may be used to directly exchange data with a memory, e.g., the memory 104b, based on requests received from a resource 106. For example, in this way, a communication interface may directly read data (via the DMA controller 110) from the memory 104b and transmit these data, without having to exchange further data with a processing unit 102. Generally, a DMA controller 110 may communicate with the memory or memories via the communication system 114 or via one or more dedicated communication channels.

As mentioned before, one or more of the memories 104 and/or 104b may be connected externally to an integrated circuit of the processing system 10. For example, the processing system 10 may comprise:
- a first memory 104 and/or 104a integrated in the integrated circuit of the processing system 10 and connected to the communication system 114 via a first memory controller 100, and
- a second memory 104 and/or 104a external with respect to the integrated circuit of the processing system 10 and connected to the communication system 114 via a second memory controller 100.

In the context of automotive applications, such processing systems 10 and respective sub-systems may have to satisfy given Automotive Safety Integrity Level (ASIL) levels defined by ISO 26262. Similarly, security levels may also be defined for other application. For example, possible solutions for implementing safety protections of the memory subsystem are disclosed in United States Patent Application Publication nos. US 2020/0310683 A1, US 2022/0243437 A1. US 2022/0180959 A1 and US 2019/0220346 A1, and United States Patent no. US 11,392,455 B1, and US5249187.

### Summary

In view of the above, it is an objective of various embodiments of the present disclosure to provide improved solutions for interfacing one or more external memories with a processing system, such as a microcontroller.

One or more of the above objectives is achieved by means of a processing system having the features specifically set forth in the claims that follow. Embodiments moreover concern a related integrated circuit, device and method.

The present disclosure relate to a processing system integrated in an integrated circuit. The processing system comprises a communication system, a memory controller subsystem configured to interface a memory being external with respect to the integrated circuit and a master circuit configured to send write and read requests via the communication system to the memory subsystem to store data to and read data from the memory. For example, the master circuit may be a microprocessor or a DMA controller. Specifically, the memory controller subsystem is connected to the communication system and a communication channel connected to terminals of the integrated circuit configured to be connected to the memory. Specifically, the communication channel comprises at least a data signal. For example, the communication channel may be a Serial Peripheral Interface (SPI) or OctalSPI bus.

The memory controller subsystem comprises a first memory controller and a second memory controller. Each of the first memory controller and the second memory controller is configured to receive a write or read request comprising data indicating a memory address and, in case of a write request, respective data to be stored. In response to receiving a write request, the memory controller extracts the respective memory address and the respective data to be stored from the write request, and generates a respective first or second communication for storing the respective extracted data to the respective extracted memory address by generating a respective first or second data signal used to transmit the respective extracted memory address and the respective extracted data. Conversely, in response to receiving a read request, the memory controller extracts the respective memory address from the read request, and generates the respective first or second communication for receiving data associated with the extracted memory address by generating the respective first or second data signal in order to transmit the respective extracted memory address and receive the respective data associated with the extracted memory address. Moreover, in response to having received the respective data, the memory controller generates a respective first or second response comprising the respective received data.

In a first operating mode, the first communication of the first memory controller is connected to the communication channel, whereby the first data signal corresponds to the data signal.

In the first operating mode, in response to receiving from the communication system a write request, the memory controller subsystem is configured to forward the received write request to the first memory controller and the second memory controller, whereby the first memory controller generates the respective first data signal used to transmit the respective extracted memory address and the respective extracted data and the second memory controller generates the respective second data signal used to transmit the respective extracted memory address and the respective extracted data. Moreover, the memory controller subsystem is configured to compare the first data signal with the second data signal and, in response to determining that the first data signal does not correspond to the second data signal, assert a first error signal.

In the first operating mode, in response to receiving from the communication system a read request, the memory controller subsystem is configured to forward the received read request to the first memory controller and the second memory controller, whereby the first memory controller generates the respective first data signal used to transmit the respective extracted memory address and receive the respective data associated with the respective extracted memory address and the second memory controller generates the respective second data signal used to transmit the respective extracted memory address and receive the respective data associated with the respective extracted memory address. Moreover, the first memory controller generates the respective response comprising the respective received data and the second memory controller generates the respective response comprising the respective received data. Furthermore, in response to determining that the first memory controller transmits the extracted memory address via the first data signal, the memory controller subsystem is configured to compare the first data signal with the second data signal and, in response to determining that the first data signal does not correspond to the second data signal, assert a second error signal. Conversely, in response to determining that the first memory controller receives the respective data via the first data signal, the memory controller subsystem is configured to connect the first data signal to the second data signal, compare the first response generated by the first memory controller with the second response generated by the second memory controller and, in response to determining that the first response does not correspond to the second response, assert a third error signal.

In various embodiments, in a second operating mode, the first communication of the first memory controller and the second communication of the second memory controller are connected to the communication channel, whereby the first data signal and the second data signal correspond to the data signal. Specifically, in this case, the communication channel is a shared communication channel.

In various embodiments, in the second operating mode, in response to receiving from the communication system a write request, the memory controller subsystem is configured to select one of the first memory controller and the second memory controller, and forward the received write request to the one memory controller, whereby the one memory controller generates the respective first data signal used to transmit the respective extracted memory address and the respective extracted data. Next, the memory controller subsystem selects the other one of the first memory controller and the second memory controller, and forwards the received write request to the other one memory controller, whereby the other one memory controller generates the respective first data signal used to transmit the respective extracted memory address and the respective extracted data.

In various embodiments, in the second operating mode, in response to receiving from the communication system a read request, the memory controller subsystem is configured to select one of the first memory controller and the second memory controller, and forward the received read request to the one memory controller, whereby the one memory controller generates the respective data signal used to transmit the respective extracted memory address and receives the respective data associated with the respective extracted memory address, and the one memory controller generates the respective response comprising the respective received data. Next, the memory controller subsystem selects the other one of the first memory controller and the second memory controller, and forwards the received read request to the other one memory controller, whereby the other one memory controller generates the respective data signal used to transmit the respective extracted memory address and receives the respective data associated with the respective extracted memory address, and the other one memory controller generates the respective response comprising the respective received data,. Next, the memory controller subsystem compares the first response generated by the first memory controller with the second response generated by the second memory controller and, in response to determining that the first response does not correspond to the second response, assert a fourth error signal.

In various embodiments, in the first and/or second operating mode, the first and the second responses comprise respective first and second response control signals. In this case, the memory controller subsystem may be configured to compare the first response control signals generated by the first memory controller with the second response control signals generated by the second memory controller and, in response to determining that the first response control signals do not correspond to the second response control signals, assert a fifth error signal.

In various embodiments, in a third operating mode, the first communication of the first memory controller and the second communication of the second memory controller are connected to the communication channel, whereby the first data signal and the second data signal correspond to the data signal. Specifically, in this case, the communication channel is a shared communication channel.

In various embodiments, in the third operating mode, in response to receiving from the communication system a write request, the memory controller subsystem is configured to determine whether the write request comprises data indicating a memory address associated with the first memory controller or data indicating a memory address associated with the second memory controller. In response to determining that the write request comprises data indicating a memory address associated with the first memory controller, the memory controller subsystem is configured to forward the received write request to the first memory controller, whereby the first memory controller generates the respective first data signal used to transmit the respective extracted memory address and the respective extracted data. Conversely, in response to determining that the write request comprises data indicating a memory address associated with the second memory controller, the memory controller subsystem is configured to forward the received write request to the second memory controller, whereby the second memory controller generates the respective second data signal used to transmit the respective extracted memory address and the respective extracted data.

In various embodiments, in the third operating mode, in response to receiving from the communication system a read request, the memory controller subsystem is configured to determine whether the read request comprises data indicating a memory address associated with the first memory controller or data indicating a memory address associated with the second memory controller. In response to determining that the read request comprises data indicating a memory address associated with the first memory controller, the memory controller subsystem is configured to forward the received read request to the first memory controller, whereby the first memory controller generates the respective data signal used to transmit the respective extracted memory address and receives the respective data associated with the respective extracted memory address, and the first memory controller generates the respective response comprising the respective received data. Conversely, in response to determining that the read request comprises data indicating a memory address associated with the second memory controller, the memory controller subsystem is configured to forward the received read request to the second memory controller, whereby the second memory controller generates the respective data signal used to transmit the respective extracted memory address and receives the respective data associated with the respective extracted memory address, and the second memory controller generates the respective response comprising the respective received data.

**In** various embodiments, e.g., in the second and third operating mode, the shared communication channel comprises a first chip-enable signal adapted to enable a first memory and a second chip-enable signal adapted to enable a second memory. **In** this case, the first memory controller may be configured to assert the first chip select signal when transmitting or receiving data via the first data signal and the second memory controller is configured to assert the second chip select signal when transmitting or receiving data via the second data signal.

**In** various embodiments, the memory controller subsystem comprises a first Error-Correction Code (ECC) circuit associated with the first memory controller and a second ECC circuit associated with the second memory controller. **In** this case, in response to receiving a write request, each memory controller may be configured to calculate ECC bits via the respective first or second ECC circuit, and transmit the respective extracted memory address, the respective extracted data and the respective calculated ECC bits. Conversely, in response to receiving a read request, each memory controller may be configured to transmit the respective extracted memory address and receive the respective data and respective ECC bits, calculate via the respective first or second ECC circuit further ECC bits, and compare the further ECC bits with the received ECC bits and, in response to determining that the further ECC bits do not correspond to the received ECC bits, assert an ECC error signal. **In** various embodiments, the ECC circuits may be error detection and correction circuits configured to generate corrected data, wherein the first or second response comprises the respective corrected data. **In** various embodiments, the ECC circuits may be configured to calculate the respective ECC bits as a function of the respective extracted data or received data and the respective memory address.

**In** various embodiments, the memory controller subsystem may support a plurality of modes and the memory controller subsystem may comprises a control circuit configured to receive configuration data and select one of the first, second or third operating mode as a function of the configuration data.

### Brief description of the figures

Embodiments of the present disclosure will now be described with reference to the annexed drawings, in which:
- Figure 1 shows an example of an electronic system comprising a plurality of processing systems;
- Figure 2 shows an example of a processing system, such as a microcontroller;
- Figure 3 shows an example of a multi-core processing system;
- Figure 4 shows an embodiment of a processing system according to the present disclosure;
- Figure 5 and 6 show embodiments of a memory controller subsystem for the processing system of Figure 4;
- Figure 7 shows an embodiment of the implementation of a write request in a first operating mode of the memory controller subsystem of Figures 5 or 6;
- Figure 8 shows an embodiment of the implementation of a read request in the first operating mode of the memory controller subsystem of Figures 5 or 6;
- Figure 9 shows an embodiment of the implementation of a write request in a second operating mode of the memory controller subsystem of Figures 5 or 6;
- Figure 10 shows an embodiment of the implementation of a read request in the second operating mode of the memory controller subsystem of Figures 5 or 6;
- Figure 11 shows an embodiment of the implementation of a write request in a third operating mode of the memory controller subsystem of Figures 5 or 6; and
- Figure 12 shows an embodiment of the implementation of a read request in the third operating mode of the memory controller subsystem of Figures 5 or 6.

### Detailed Description

In the following description, numerous specific details are given to provide a thorough understanding of embodiments. **In** other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment.

The references provided herein are for convenience only and do not interpret the scope or meaning of the embodiments.

In the following Figures 4 to 12 parts, elements or components which have already been described with reference to Figures 1 to 3 are denoted by the same references previously used in such Figures; the description of such previously described elements will not be repeated in the following in order not to overburden the present detailed description.

As mentioned before, various embodiments of the present disclosure provide improved solutions for interfacing one or more external memories with a processing system, such as a microcontroller.

Figure 4 shows an embodiment of a processing system 10a according to the present disclosure. Specifically, in the embodiment considered, the processing system 10a comprises a master circuit 54 connected to a memory controller 50 via a communication system 52.

Specifically, the master circuit 54 may be any digital processing circuit configured to send (read and write) requests via the communication system 52 to the memory controller 50. For example, in line with the description of Figures 2 and 3, the master circuit 54 may be a processing core 102 comprising a microprocessor 1020, or an integrated or general-purpose DMA controller, such as a DMA controller 110. Accordingly, the communication system 52 may comprise a system bus or system NoC 114, and/or a dedicated DMA communication channel.

Specifically, the memory controller 50 is configured to interface an external memory 42, i.e., the memory 42 is external with respect to an integrated circuit 40 comprising the master circuit 54, the communication system 52 and the memory controller 50. In general, the external memory 42 may be a non-volatile memory or a volatile memory. Accordingly, with respect to Figures 2 and 3, in various embodiments, the memory controller 50 may be used as a memory controller 100 configured to interface a non-volatile memory 104 or a volatile memory 104b with a communication system 114 of the processing system 10a.

In various embodiments, as shown in Figure 4, the master circuit 54 is configured to send read and write requests to the memory controller 50, wherein these requests are transmitted via the communication system 52. Accordingly, the memory controller 50 is configured to exchange with the communication system 52 various signals COM for communicating the request and a possible response.

For example, for this purpose, each request may comprise address data ADR indicating an address in the physical address range of the communication system 52, wherein a given address range of the physical address range of the communication system 52 is associated with the memory controller 50, i.e., the communication system 52 is configured to forward requests addressed to a given physical address range to the memory controller 50. In this respect, the memory controller 50 may be configured to map the address ADR of the physical address range associated with the memory controller 50 to respective addresses of the memory 42. In general, this address mapping operation is purely optional, because the physical address of the communication system 52 may also correspond directly to the memory address, e.g., in case of a dedicated DMA channel.

For example, in case the communication system 52 is a system bus or NoC, the processing system 10a may comprise one or more further slave interfaces connected to the communication system 52, wherein a respective physical address range is associated with each slave interface. For example, such slave interfaces may be used to interface the communication system 52 with one or more resources/peripherals 106 (or a respective peripheral bridge) and/or a further memory controller 100. Accordingly, the processing system 10a may be a microcontroller, such as a multi-core microcontroller, as described with respect to Figures 2 and 3.

In various embodiments, the master circuit 54 is configured to signal a request via one or more request control signals CREQ, e.g., indicating that a request should be transmitted and the type of the request. For example, the signal CREQ may comprise a signal REQ being asserted, e.g., set to high, to indicate a request, and a signal W_R being set to a first logic level, e.g., low, to indicate a read request and a second logic level, e.g., high, to indicate a write request.

In various embodiments, in response to a request, the memory controller 50 may transmit a response to the master circuit 54, wherein this response is again transmitted via the communication system 52.

For example, in case of a write request, the write request comprises also data to be transmitted to the memory controller 50. In response to having received the write request, the memory controller 50 may then write the received data to the memory 42, wherein the respective memory address is indicated via the address data ADR (e.g., by mapping the address ADR to a respective memory address). Accordingly, in this case, the memory controller 50 may transmit a response to the master circuit 54 comprising one or more response control signals CRES indicating whether the write request has been received and/or whether the write operation was successful or not. In general, such a response is purely optional in case of a write request.

Conversely, in response to having received a read request, the memory controller 50 may read data from the memory 42, wherein the respective memory address is indicated via the address data ADR (e.g., by mapping the address ADR to a respective memory address). Accordingly, in this case, the memory controller 50 may transmit a response to the master circuit 54, wherein the response comprises the data having been read from the memory 42. In various embodiments, the response may comprise also further response control data CRES, e.g., associated with an error correction operation.

In general, the communication system 52 (and thus also the master circuit 54 and the memory controller 50) may be configured to exchange the (write) data transmitted by the master circuit 54 and the (read) data transmitted by the memory controller 50 via a shared bi-directional data signal DATA (as shown in Figure 4) or via two separate data signals, e.g., DATA_IN and DATA_OUT. Typically, the data signal DATA has (or the data signal DATA_IN and DATA_OUT have) a given number of bits, such as 8, 16 or 32 bits.

Accordingly, in various embodiments, the memory controller 50 is configured to receive a communication COM from the communication system 52, wherein the communication COM comprises a read request or a write request, and execute the request by communicating with the external memory 42 by using further signals EXT.

In general, various types of memory controllers 50 are known in the art. For example, the memory controller 50 may be an SPI or an OctalSPI memory controller. For example, in case of an SPI interface, the memory controller 50 communicates with the memory 42 via four signals: a data-in signal SIN, a data-out signal SOUT, a clock signal SCK and a chip-select signal SCS. Conversely, as also shown in Figure 4, in case of OctalSPI, often also identified as OctoSPIOctalSPI, the memory controller 50 communicates with the memory 42 via a clock signal CLK, a chip-select signal SCS and eight bi-directional data signals IO[7:0], which thus may be used to transmit in parallel eight bits in response to a clock signal CLK. Accordingly, in this case, the integrated circuit 40 comprises for each of these signals a respective pad of a die of the integrated circuit 40 or pin of a packaged integrated circuit 40.

For example, in various embodiments, the communication system 52 is configured to use an address ADR with 32 bits and data DATA with 32 bits. Accordingly, in this case, the OctalSPI interface of the memory controller 50 may be configured to use four cycles for transmitting the address ADR and four cycles for exchanging (i.e., sending or receiving) the respective data DATA. Moreover, usually one or more cycles are used to transmit a command/instruction indicating a write or read operation. In general, the sampling of the values of the signals IO may occur in response to a rising edge and/or a falling edge of the clock signal CLK.

The OctalSPI interface and its variants, such as Hexadeca-SPI, are well-known in the art, e.g., in the context of the STM32 based microcontrollers. For example, reference can be made to the application note AN5050 *"*Getting started with Octo-SPI and Hexadeca-SPI Interface on STM32 microcontrollers", March 2023.

In general, instead of using OctalSPI, the memory controller 50 and the memory 42 may also use another communication protocol. Specifically, in various embodiments, the communication protocol is a serial or at least sequential communication protocol, i.e., a communication protocol using one or more data signals IO, wherein the number of data signals is preferably smaller than the number of bits of the data DATA exchanged via the communication system 52. Specifically, in various embodiments, this communication protocol is a synchronous communication protocol, i.e., the memory controller 50 is configured to generate a clock signal CLK. As mentioned before, in various embodiments, the signals IO are used to exchange a command indicating a read operation or a write operation, a respective memory address and the respective data (read from the memory or to be written to the memory, respectively).

In various embodiments, the memory controller 50 and the memory 42 are configured to use a communication protocol having a chip-select signal CS, such as SPI or OctalSPI. In fact, in this case, a plurality of memories 42 may be connected in parallel to the same clock and data signals, e.g., the signals CLK and IO, wherein each memory 42 receives a respective chip-select signal. Accordingly, in this case, the memory interface 50 (or another circuit of the processing system 10a, such as a processing core 102) may enable one of the memories 42 by asserting the respective chip-select signal. For example, in case of an OctalSPI, a memory 42 is enabled when the respective chip-select signal is set to low.

Accordingly, in various embodiments, the memory controller 50 may be connected to the communication system 52 as any other memory controller of the processing system 10a, whereby a master device 54 of the communication system 52 may communicate with the memory controller 50 (as any other memory controller 100) by sending memory transaction requests COM to the memory controller 50. Conversely, the communication EXT with the external memory 42 may use a communication system having less wires.

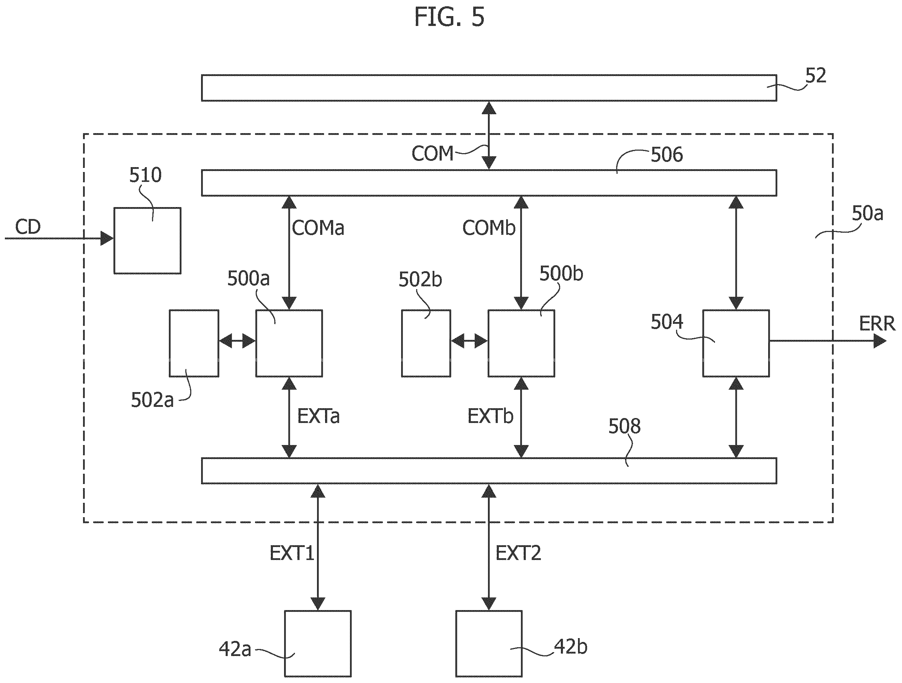

Figure 5 shows an embodiment of a memory controller subsystem 50a according to the present disclosure. Specifically, this memory controller subsystem 50a may be used as the memory controller 50 of Figure 4.

The memory controller subsystem 50a comprises at least a first memory controller 500a and a second memory controller 500b.

Specifically, in various embodiments, the memory controller 500a is configured to receive read and write requests via signals COMa. In response to having received a request via the signals COMa, the memory controller 500a generates signals EXTa for communicating with an external memory. Specifically, in response to a read request received via the signals COMa, the memory controller 500a generates the signals EXTa in order to read data from a memory address indicated by the read request and then generates a response which is communicated via the signals COMa. Conversely, in response to a write request received via the signals COMa, the memory controller 500a generates the signals EXTa in order to write data received with the write request to a memory address indicated by the write request.

Similarly, in various embodiments, the memory controller 500b is configured to receive read and write requests via signals COMb. In response to having received a request via the signals COMb, the memory controller 500a generates signals EXTb for communicating with an external memory. Specifically, in response to a read request received via the signals COMb, the memory controller 500b generates the signals EXTb in order to read data from a memory address indicated by the read request and then generates a response which is communicated via the signals COMb. Conversely, in response to a write request received via the signals COMb, the memory controller 500a generates the signals EXTb in order to write data received with the write request to a memory address indicated by the write request.

For example, similar to what has been described with respect to Figure 4, each of the memory controllers 500a and 500b may be configured to received read and write requests by using the previous described signals ADR, DATA (or DATA_IN and DATA_OUT), CREQ and CRES. Accordingly, each of the signals COMa and COMb may comprise such signals, such as signals DATA_INa and DATA_OUTa (or DATAa), ADRa, CREQa and CRESa for the communication COMa, and signals DATA_INb and DATA_OUTb (or DATAb), ADRb, CREQb and CRESb for the communication COMb. Moreover, for communicating with a memory, each memory controller 500a and 500b may be configured to generate a clock signal CLK, one or more data signals IO and preferably a chip-select signal CS. Accordingly, each of the signals EXTa and EXTb may comprise such signals, such as signals CLKa, IOa and CSa for the communication EXTa, and CLKb, IOb and CSb for the communication EXTb.

In various embodiments, the memory controller subsystem 50a comprises also a comparison circuit 504 configured to compare one or more signals and generate one or more error signals ERR as a function of the comparison. For example, the one or more error signals ERR may be provided to a fault collection and error management circuit of the processing system 10a. For example, such a fault collection and error management circuit may be configured to generate an interrupt or reset of the processing system 10a as a function of the one or more error signals ERR.

In various embodiments, the memory controller subsystem 50a may also comprise a first error detection and optionally correction circuit 502a associated with the memory controller 500a and a second error detection and optionally correction circuit associated 502b with the memory controller 500b. For example, as per se well-known in the art, an error detection circuit may use an Error Correction Code (ECC). For example, in this case, the error detection circuit receives a plurality of bits and respective ECC bits, and calculates further ECC bits for plurality of bits. In this respect, based on the used ECC scheme, the error detection circuit may detect and optionally correct errors in the plurality of bits by comparing the calculated ECC bits with the received ECC bits.

In various embodiments, the memory controller subsystem 50a comprises a first switching circuit 506 configured to interface the memory controller subsystem 50a with the communication system 52, which is schematically shown via the signals COM. For example, as mentioned before, also the signals COM may comprise respective signals ADR, DATA_IN and DATA_OUT (or DATA), CREQ and CRES.

Specifically, in various embodiments, the first switching circuit 506 is configured to selectively connect the signals COM to the first memory controller 500a (via the signals COMa), the second memory controller 500b (via the signals COMb) and the comparison circuit 504.

In various embodiments, the memory controller subsystem 50a comprises also a second switching circuit 508 configured to interface the memory controller subsystem 50a with a first external memory 42a, which is schematically shown via signals EXT1, and optionally a second external memory 42b, which is schematically shown via signals EXT2. For example, also each of the signals EXT1 and EXT2 may comprise respective signals CLK, IO and optionally CS, such as such as signals CLK1, IO1 and CS1 for the communication EXT1, and CLK2, IO2 and CS2 for the communication EXT2. As mentioned before, the clock signals CLK1 and CLK2, and the data signals IO1 and IO2 may also be shared signals, i.e., the clock signals CLK1 and CLK2 may correspond to a clock signal CLK and the data signals IO1 and IO2 may correspond to data signals IO.

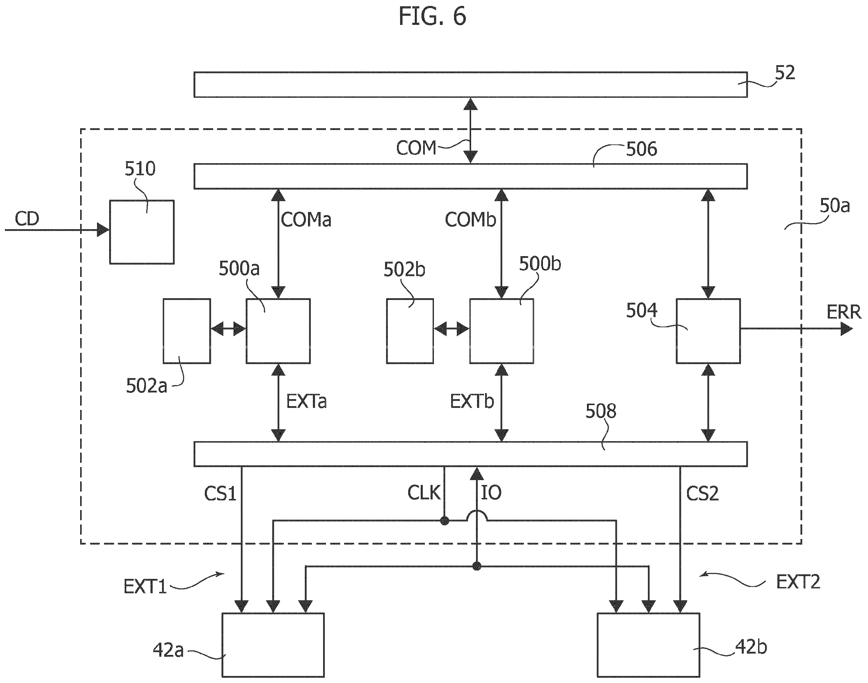

For example, this is also shown in Figure 6, wherein the switching circuit 508 provides a clock signal CLK, one or more data signals IO, a first chip-select signal CS1 and a second chip-select signal CS2. Accordingly, in this case, the signals EXT1 used to interface the memory 42a may comprise the signals CLK, IO and CS1 and the signals EXT2 used to interface the memory 42b may comprise the signals CLK, IO and CS2. Accordingly, in this case, the integrated circuit 40 may comprise just pads/pins for the signals CLK, IO, CS1 and CS2, because the signals CLK and IO are shared for both memories 42a and 42b, while the chip-select signals CS1 and CS2 may be used to enable one of the memories 42a or 42b.

Those of skill in the art will appreciate that shared signals may be implemented by connecting the respective line via a pull-up resistance to a supply voltage, and wherein each circuit arranged to transmit data comprises an open drain driver. In fact, in this case, when none of the circuits drives the line (open drain configuration), the line is connected via the pull-up resistance to the supply voltage and the logic level of the line is high. Conversely, when one of the circuits connects the line via the driver circuit to ground, the logic level of the line is low. In general, such a pull-up resistance may be integrated in the integrated circuit 40 and/or may be connected externally to the respective pad/pin of the integrated circuit 40. For example, in various embodiments, each of the memory controllers 500a and 500b may comprise an open-drain driver for the clock signal CLK and each signal IO. In general, each of the memory controllers 500a and 500b may drive the respective chip-select signal CSa and CSb via an open-drain driver or via a push-pull configuration.

Specifically, in various embodiments, the second switching circuit 508 is configured to selectively connect the signals EXT1 and EXT2 to the first memory controller 500a (via the signals EXTa), the second memory controller 500b (via the signals EXTb) and the comparison circuit 504.

In various embodiments, the memory controller subsystem 50a comprises thus also a control circuit 510 configured to drive the first switching circuit 506 and the second switching circuit 508 as a function of configuration data CD.

For example, in various embodiments, the processing system 10a is configured to read the configuration data CD from a non-volatile memory of the processing system 10a. In general, this non-volatile memory may be any non-volatile memory integrated in the integrated circuit 40 or external with respect to the integrate circuit 42. For example, the configuration data CD may be stored to a non-volatile program memory 104 of the processing system 10a or a One-Time Programmable (OTP) memory, e.g., implemented with fuses. Alternatively, the non-volatile memory may be an external memory, e.g., the first external memory 42a. For example, in various embodiments, the processing system 10a may be configured to read the configuration data CD from such a non-volatile memory during an initialization phase of the processing system 10a. For example, European Patent Application Publication no. EP 3 413 194 A1, discloses possible solutions for obtaining configuration data of a processing system 10a from a non-volatile memory.

Alternatively, the configuration data CD may be set via one or more pads or pins of the integrated circuit 40, e.g., by connecting selectively the respective pin to a supply voltage or ground. In general, the configuration data CD may also be hard-wired within the processing system 10a.

Alternatively, the configuration data CD may be stored to a register, preferably a register being programmable via write requests sent via the communication system 52, such as registers being programmable by a microprocessor 1020 of the processing system 10a.

Accordingly, in various embodiments, the control circuit 510 is configured to manage different operating modes of the memory controller subsystem 50a as a function of the configuration data CD.

As mentioned before, the memory controller subsystem 50a is configured to support a plurality of operating modes as a function of the configuration data CD. Specifically, the memory controller subsystem 50a supports at least one and preferably at least two of the following operating modes:
- a first operating mode, e.g., when the configuration data CD are set to "00";
- a second operating mode, preferably being ASIL B or C compliant, e.g., when the configuration data CD are set to "01"; and
- a third operating mode, preferably being ASIL D compliant, e.g., when the configuration data CD are set to "10".

As indicated before, even though reference is made to a first, second or third operating mode, the memory controller subsystem 50a may support just one of the operating modes or any combination of operating modes, e.g., the first operating mode and the second operating mode, the first operating mode and the third operating mode, the second operating mode and the third operating mode, or all three operating modes.

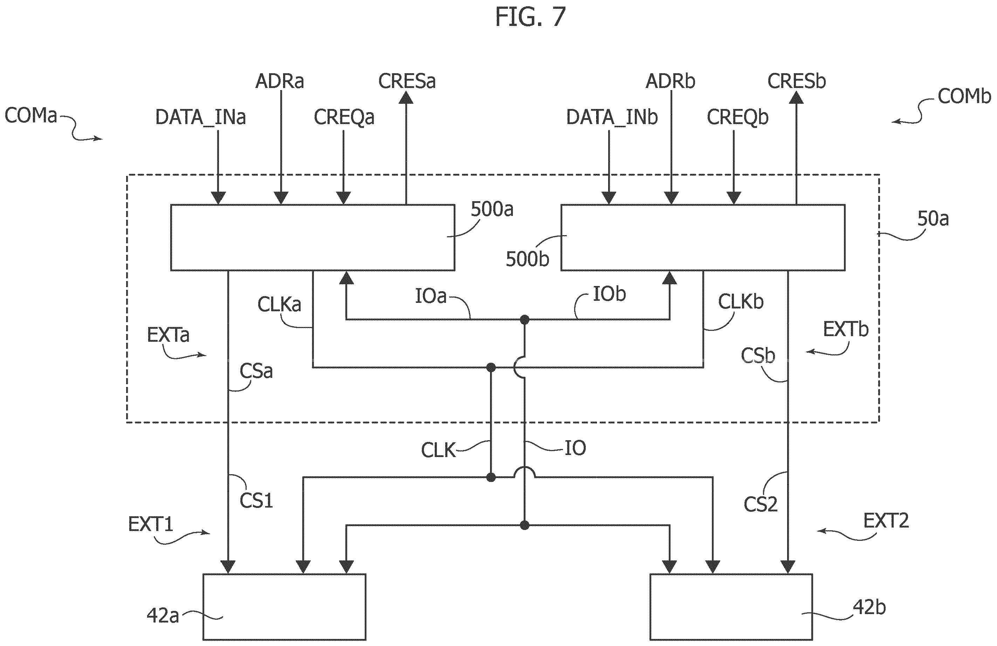

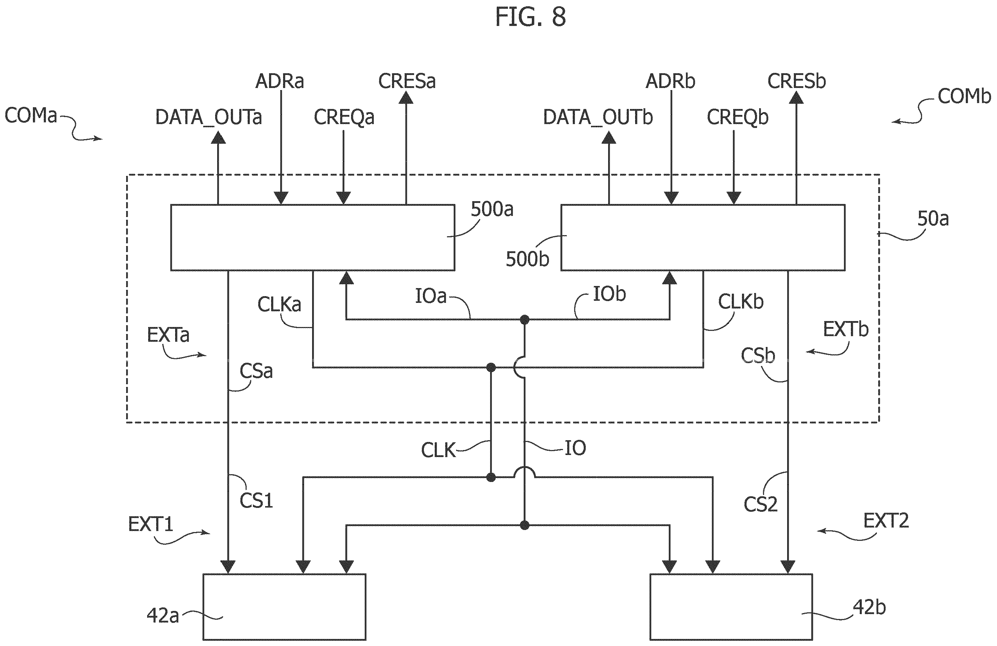

Figures 7 and 8 show an embodiment of the first operating mode. Specifically, Figure 7 shows the scenario when the memory controller subsystem 50a receives a write request and Figure 8 shows the scenario when the memory controller subsystem 50a receives a read request.

Specifically, in the first operating mode, each memory controller 500a and 500b is configured to interface a respective memory 42a and 42b. For example, in the embodiment considered, the second switching circuit 508 is configured such that the communication EXT1 corresponds to the communication EXTa of the first memory controller 500a and the communication EXT2 corresponds to the communication EXTb of the second memory controller 500b.

Accordingly, in this case, the memory controller subsystem 50a has associated two address subranges in the physical address range of the communication system 52, wherein requests having an address in the first subrange are used to interface to first memory 42a via the first memory controller 500a and requests having an address in the second subrange are used to interface to second memory 42b via the second memory controller 500b.

In general, the respective address mapping operation may be implemented in each memory controller 500a and 500b, or within the switching circuit 506. Specifically, in the former case, each of the communications COMa and COMb corresponds to the communication COM exchanged with the communication system 52. Conversely, in the latter case, the switching circuit 506 receives a request from the communication system 52 via the signals COM and forwards the request via the signals COMa or COMb to one of the memory controllers 500a and 500b as a function of the address data ADR included in the request, possibly also implementing an address mapping operation.

For example, in Figures 7 and 8 is schematically shown that each memory controller 500a and 500b is configured to receive a request comprising:
- a respective address ADRa or ADRb, possibly directly corresponding to a memory address, e.g., obtained via an address mapping operation;
- respective request control signals CREQa or CREQb indicating the type of the request, i.e., write request or read request.

Moreover, as shown in Figure 7, in case of a write request, each memory controller 500a and 500b is configured to receive respective data DATA_INa or DATA_INb to be stored to the respective memory. Conversely, as shown in Figure 8, in case of a read request, each memory controller 500a and 500b is configured to provide respective data DATA_OUTa or DATA_OUTb comprising the data read from the respective memory. As described in the foregoing, these data may also be communicated via a bi-directional data signal DATA.

Moreover, each memory controller 500a and 500b may generate one or more response control signals CRESa or CRESb, e.g., indicating that the request has been received and/or processed, e.g., in order to indicate that the data DATA_OUTa or DATA_OUTb having been read from the respective memory are available.

Accordingly, when receiving a write request comprising an address ADR associated with the memory controller 500a, the memory controller 500a uses the signals EXTa in order to write the respective data DATA_INa (corresponding to the data received via the communication COM from the communication system 52) to the memory 42a, e.g., by asserting a chip-select signal CSa, generating a clock signal CLKa and transmitting the memory address ADRa and the data DATA_INa via signals IOa. As mentioned before, in order to interface the memory 42a, the second switching circuit 508 may connect the signals EXTa to the signals EXT1, e.g., the signals CSa, CLKa and IOa may correspond to the signals CS1, CLK and IO, respectively.

Conversely, when receiving a read request comprising an address ADR associated with the memory controller 500a, the memory controller 500a uses the signals EXTa in order to read the respective data DATA_OUTa from the memory 42a, e.g., by asserting the chip-select signal CSa, generating the clock signal CLKa, transmitting the memory address ADRa via the signals IO, and receiving the data DATA_OUTa via the signals IO. Also in this case, in order to interface the memory 42a, the second switching circuit 508 may connect the signals EXTa to the signals EXT1, e.g., the signals CSa, CLKa and IOa may correspond to the signals CS1, CLK and IO, respectively. Next, the memory controller 500a transmits a response, e.g., signaled via the signals CRESa, comprising the data DATA_OUTa (corresponding to the data received from the memory 42a).

As mentioned before, when using OctalSPI, the memory address ADRa and the data DATA_INa may be exchanged sequentially via the same bidirectional lines IO.

Similarly, when receiving a write request comprising an address ADR associated with the memory controller 50b, the memory controller 500a uses the signals EXTb in order to write the respective data DATA_INb (corresponding to the data received via the communication COM from the communication system 52) to the memory 42b, e.g., by asserting a chip-select signal CSb, generating a clock signal CLKb and transmitting the memory address ADRb and the data DATA_INb via signals IOb. As mentioned before, in order to interface the memory 42b, the second switching circuit 508 may connect the signals EXTb to the signals EXT2, e.g., the signals CSb, CLKb and IOb may correspond to the signals CS2, CLK and IO, respectively.

Conversely, when receiving a read request comprising an address ADR associated with the memory controller 500b, the memory controller 500a uses the signals EXTb in order to read the respective data DATA_OUTb from the memory 42b, e.g., by asserting the chip-select signal CSb generating the clock signal CLK, transmitting the memory address ADRb via the signals IO, and receiving the data DATA_OUTb via the signals IO. Also in this case, in order to interface the memory 42b, the second switching circuit 508 may connect the signals EXTb to the signals EXT2, e.g., the signals CSb, CLKb and IOb may correspond to the signals CS2, CLK and IO, respectively. Next, the memory controller 500b transmits a response, e.g., signaled via the signals CRESb, comprising the data DATA_OUTb (corresponding to the data received from the memory 42b).

Accordingly, in the embodiment considered, the first operating mode may be used to interface independently two external memories 42a and 42b via two memory controllers 500a and 500b, where each memory controller 500a and 500b has associated a respective subrange in the address range of the communication system 52. In general, the number of memory controllers 500 (and respective memories 42) may also be greater than two.

Accordingly, in various embodiments, a master circuit 54 may write and read in the first operating mode the complete memory space of the memories 42a and 42b.

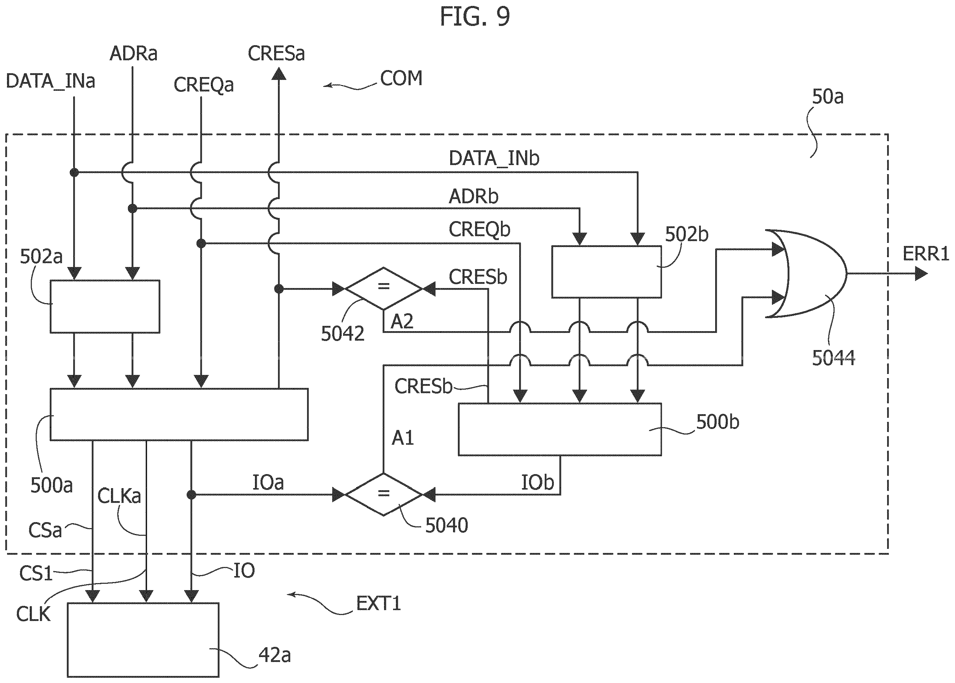

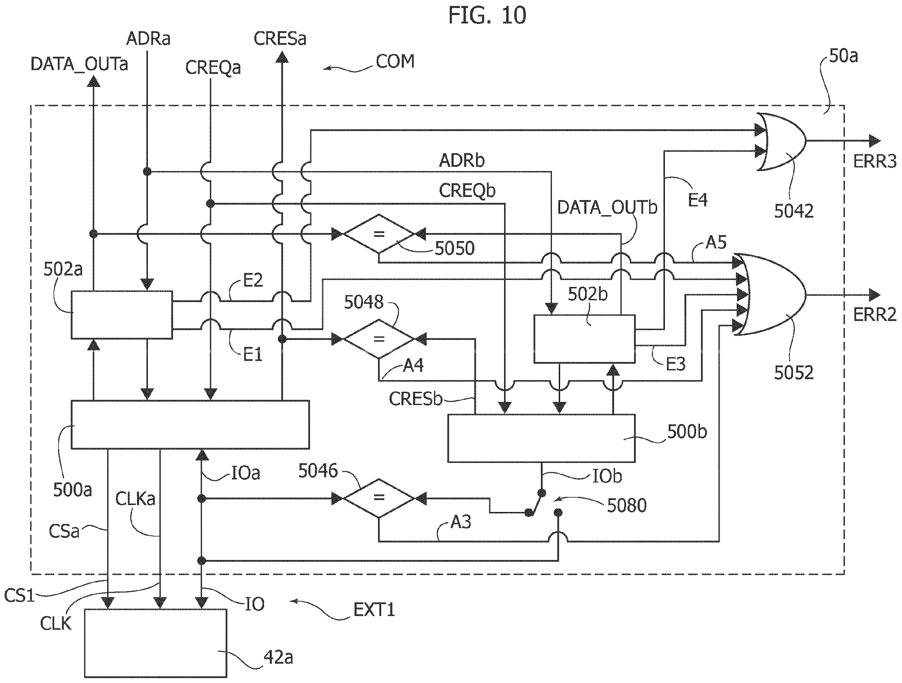

Figures 9 and 10 show an embodiment of the second operating mode. Specifically, Figure 9 shows the scenario when the memory controller subsystem 50a receives a write request and Figure 10 shows the scenario when the memory controller subsystem 50a receives a read request.

Specifically, in the embodiment considered, the first memory controller 500a is configured to interface an external memory 42a, while the second memory controller 500a and the comparison circuit 504 are configured to verify the operation of the first memory controller 500a.

In various embodiments, the memory controller subsystem 50a may also use the first and optionally second ECC circuits 502a and 502b. Specifically, in various embodiments, when receiving a write request, the first ECC circuit 502a and the first memory controller 500a are configured to store additional ECC bits to the memory 42a. Moreover, when receiving a read request, the ECC circuit 502a and the memory controller 500a are configured to verify the ECC bits read from the memory 42a. In this case, the second ECC circuit 502b and the comparison circuit 504 may be configured to verify the operation of the first ECC circuit 502a.

Specifically, in the embodiment shown in Figure 9, in response to receiving a write request, the first switching circuit 506 is configured to forward the communication COM to the first memory controller 500a, which thus receives an address ADRa (e.g., obtained via an address mapping of the address ADR of the communication COM), the respective data DATA_INa of the write request and the respective request control signals CREQa (received via the communication COM).

In various embodiments, the first ECC circuit 502a may be configured to calculate ECC bits exclusively as a function of the received data DATA_INa, or as a function of the received data DATA_INa and the memory address ADRa.

Accordingly, in various embodiments, when receiving via the communication COM a write request comprising an address ADR associated with the memory controller 500a, the memory controller 500a uses the signals EXTa in order to write the respective data DATA_INa (corresponding to the data received via the communication COM from the communication system 52) and the optional ECC bits generated by the ECC circuit 502a to the memory 42a, e.g., by asserting the chip-select signal CSa, generating a clock signal CLKa and transmitting the memory address ADRa, the data DATA_INa and the optional ECC bits via signals IOa. As mentioned before, in order to interface the memory 42a, the second switching circuit 508 may connect the signals EXTa to the signals EXT1, e.g., the signals CSa, CLKa and IOa may correspond to the signals CS1, CLK and IO, respectively.

In various embodiments, the first switching circuit 506 is configured to provide the signals ADRa, DATA_INa and CREQa as respective signals ADRb, DATA_INb and CREQb to the second memory controller 500b. In this respect, when using the first ECC circuit 502a, the second ECC circuit 502b may be configured to calculate second ECC bits as a function of the received data DATA_INb (i.e., DATA_INa) and optionally the address ADRb (i.e., ADRa).

Accordingly, in various embodiments, when receiving a write request, also the memory controller 500b generates the signals EXTb in order to write the respective data DATA_INb (i.e., DATA_INa) and the optional ECC bits generated by the second ECC circuit 502b to an external memory 42b (which indeed does not exist or at least is not used), e.g., by asserting the chip-select signal CSb, generating the clock signal CLKb and transmitting the memory address ADRb, the data DATA_INb and optionally the second ECC bits via the signals IOb.

Accordingly, in the embodiment considered, in order to verify the operation of the memory controller 500a, and optionally the ECC circuit 502a, the comparison circuit 504 may comprise a comparison circuit 5040 configured to compare sequentially the bits applied by the memory controller 500a to the signal(s) IOa with the bits applied by the memory controller 500b to the signal(s) IOb, and assert an error signal A1 in response to determining that one or more bits do not correspond. While not shown in Figure 9, the comparison circuit 5040 may also be configured to compare the clock signals CLKa and CLKb, and/or the chip-select signals CSa and CSb.

As mentioned before, in various embodiments, the memory controllers 500a and 500b may also generate one or more respective response control signals CRESa and CRESb, e.g., in order to indicate that a write request has been received and/or that the write request has been executed. Accordingly, in this case, the comparison circuit 504 may comprise a comparison circuit 5042 configured to compare the signals CRESa and CRESb, and assert an error signal A2 in response to determining that the signals CRESa and CRESb do not correspond.

In various embodiments, the comparison circuit 504 may comprise a combinational logic circuit 5044, e.g., an OR gate, configured to generate a combined error signal ERR1, wherein the combinational logic circuit 5044 is configured to assert the combined error signal ERR1 in response to determining that at least one of the error signals A1 and A2 is asserted. In various embodiments, one or more of the error signals A1, A2 and/or ERR1 are provided to a fault collection and error management circuit of the processing system 10a.

Conversely, in the embodiment shown in Figure 10, in response to receiving a read request, the first switching circuit 506 is again configured to forward the communication COM to the first memory controller 500a, which thus receives an address ADRa (e.g., obtained via an address mapping of the address ADR of the communication COM) and the request control signal CREQa indicating a read request.

Specifically, in the embodiment considered, the first memory controller 500a is again configured to interface the external memory 42a, while the second memory controller 500a and the comparison circuit 504 are again configured to verify the operation of the first memory controller 500a.

Accordingly, in various embodiments, when receiving a read request comprising an address ADR associated with the memory controller 500a, the memory controller 500a uses the signals EXTa in order to read respective data DATA_OUTa from the memory 42a, e.g., by asserting the chip-select signal CSa, generating the clock signal CLKa and transmitting the memory address ADRa via the signals IOa. As mentioned before, in order to interface the memory 42a, the second switching circuit 508 may connect the signals EXTa to the signals EXT1, e.g., the signals CSa, CLKa and IOa may correspond to the signals CS1, CLK and IO, respectively.

In various embodiments, when having written ECC bits to the memory in response to a write request, the memory controller 500a receives thus also ECC bits via the signals IOa, i.e., the lines IO. Accordingly, in this case, the memory controller 500a may provide the received ECC bits, the data DATA_OUTa and optionally the address ADRa to the first ECC circuit 502a, which thus may calculate further ECC bits as a function of the data DATA_OUTa and optionally the address ADRa (based on the same ECC rules used during the write operation), and assert an error signal E1 when the received ECC bits do not correspond to the calculated ECC bits.

In various embodiments, the first ECC circuit 502a may also be configured to generate corrected data DATA_OUTa by comparing the received ECC bits with the calculated ECC bits. Specifically, in this case, the ECC circuit 502a may assert:
- the error signal E1 when an uncorrectable error is detected, e.g., a double bit error in case of a Single-Error Correction and Double-Error Detection (SECDED) ECC code;
- an error signal E2 when a correctable error is detected, e.g., a single bit error with a SECDED code.

In various embodiments, the signals ADRa and CREQa are also provides as respective signals ADRb and CREQb to the second memory controller 500b. Accordingly, in various embodiments, when receiving a read request, also the memory controller 500b generates the signals EXTb in order to read respective data DATA_OUTb from an external memory 42b (which indeed does not exist or at least is not used), e.g., by asserting the chip-select signal CSb, generating the clock signal CLKb and transmitting the memory address ADRa via signals IOb, and then sequentially sampling the signals IOb.

Accordingly, the communication between the memory controller 500a and the memory 42a is working correctly, when also the memory controller 500b transmits a read command comprising the same address, and the memory controller 500b processes the received data as the memory controller 500a.

Accordingly, in various embodiments, the comparison circuit 504 comprises a comparison circuit 5046 (possibly corresponding to the comparison circuit 5040) configured to verify whether the memory controllers 500a and 500b generate the same signals IOa and IOb in order to transmit a read command comprising the address ADRa. For example, as mentioned before, when using OctalSPI, the memory controllers 500a and 500b may be configured to transmit the read command and the memory address via a fixed number of cycles, such as 5 cycles in case of 32-bit addresses. Accordingly, the comparison circuit 5046 may be configured to determine whether the signals IOa and IOb correspond for each of this fixed number of cycles, and assert an error signal A3 in response to determining that one or more bits do not correspond. While not shown in Figure 10, the comparison circuit 5046 may also be configured to compare the clock signals CLKa and CLKb, and/or the chip-select signals CSa and CSb.

In various embodiments, the data DATA_OUTa received via the signals IO are also provided to the memory controller 500b. For example, when using OctalSPI, once having transmitted the read command via the fixed number of cycles, the memory 42a will apply the respective data to the lines IO. For example, in various embodiments, the second switching circuit 508 may comprise a switch 5080 configured to provide the signal IOb to the comparison circuit 5046 during the fixed number of cycles, and the connect the signal IOb to the line IO in order to receive the data DATA_OUTa. For example, this switch 5080 may be driven by the switching circuit 508, the first memory controller 500a or the control circuit 510 in response to having determine that the fixed number of cycles has been reached.

Accordingly, the memory controller 500b receives data DATA_OUTb, which should correspond to the data DATA_OUTa read from the memory 42a. In this respect, when having written ECC bits to the memory 42a in response to a write request, the memory controller 500b receives also ECC bits via the signals IOb, i.e., the lines IO. Accordingly, in this case, the memory controller 500b may provide the received ECC bits, the received data DATA_OUTb (which should correspond to the data DATA _OUTa) and optionally the address ADRa to the second ECC circuit 502b, which thus may calculate further ECC bits as a function of the data DATA_OUTb and optionally the address ADRa (based on the used ECC scheme), and assert an error signal E3 when the received ECC bits do not correspond to the calculated ECC bits.

Similar to the first ECC circuit 502a, in various embodiments, the second ECC circuit 502b may also be configured to generate corrected data DATA_OUTb by comparing the received ECC bits with the calculated ECC bits. Specifically, in this case, the ECC circuit 502b may assert:
- the error signal E3 when an uncorrectable error is detected, e.g., a double bit error in case of a SECDED ECC code;
- an error signal E4 when a correctable error is detected, e.g., a single bit error with a SECDED code.

Once having received the data DATA_OUTa and optionally corrected the data DATA_OUTa via the ECC circuit 502a, the memory controller 500a generates the response for transmitting the data DATA_OUTa via the signals COMa, e.g., by asserting one or more response control signals CRESa. Similarly, once having received the data DATA_OUTb and optionally corrected the data DATA_OUTb via the ECC circuit 502b, the memory controller 500b generates the response for transmitting the data DATA_OUTb via the signals COMb, e.g., by asserting one or more response control signals CRESb. In general, each of the response control signals CRESa and CRESb may also comprise signals for indicating the status of the ECC verification, such as the signals E1 and/or E2, and E3 and/or E4, respectively.

Accordingly, in various embodiments, the comparison circuit 504 may comprise a comparison circuit 5048 (possibly corresponding to the comparison circuit 5042) configured to compare the signals CRESa and CRESb, and assert an error signal A4 in response to determining that the signals CRESa and CRESb do not correspond. Similarly, in various embodiments, the comparison circuit 504 may comprise a comparison circuit 5050 configured to compare the signals DATA_OUTa and DATA_OUTb (provided by the memory controllers 500a and 500b), and assert an error signal A5 in response to determining that the signals DATA_OUTa and DATA_OUTb do not correspond.

In various embodiments, the comparison circuit 504 may comprise thus a combinational logic circuit 5052, e.g., an OR gate, configured to generate a combined error signal ERR2 indicating an uncorrectable error, wherein the combinational logic circuit 5052 is configured to assert the combined error signal ERR2 in response to determining that at least one of the error signals A3, A4, A5, E1 and E3 (when used) is asserted. In various embodiments, one or more of the error signals A3, A5, A5, E1, E3 and/or ERR2 are provided to a fault collection and error management circuit of the processing system 10a.

In various embodiments, the comparison circuit 504 may comprise also a combinational logic circuit 5054, e.g., an OR gate, configured to generate a combined error signal ERR3 indicating a correctable error, wherein the combinational logic circuit 5054 is configured to assert the combined error signal ERR3 in response to determining that at least one of the error signals E2 and E4 is asserted. In various embodiments, one or more of the error signals E2, E4 and/or ERR3 are provided to the fault collection and error management circuit of the processing system 10a.

Accordingly, in the embodiment considered, the second operation mode permits to implement an ASIL-B/C configuration with a single memory 42a. Specifically, by using an ECC code calculated for the data and the memory address, the whole path from the communication COM received from the communication system 52 till the device interface EXT1 to the external memory 42a may be protected. The ECC code is then verified when data is read from the external memory 42a.

For example, in the embodiment shown in Figure 9, the address, data, and request control signals received from the communication system 52 are sent to both memory controllers 500a and 500b. The comparator 5040 verifies the signals EXTa and EXTb generated by the memory controllers 500a and 500b. A further comparator 5048 verifies the response produced by the memory controllers 500a and 500b. Conversely, in the embodiment shown in Figure 10, the address and request control signals received from the communication system 52 are sent to both memory controllers 500a and 500b. The comparator 5046 verifies the signals EXTa and EXTb generated by the memory controllers 500a and 500b. Moreover, two comparators 5048 and 5050 verify the data and response produced by the memory controllers 500a and 500b.

However, this scheme does not protect for all possible malfunctions within the memory 42a, for example internal stuck-at signals, whereby a memory location is written or read, which does not correspond to the requested memory address as specified via the signal ADRa.

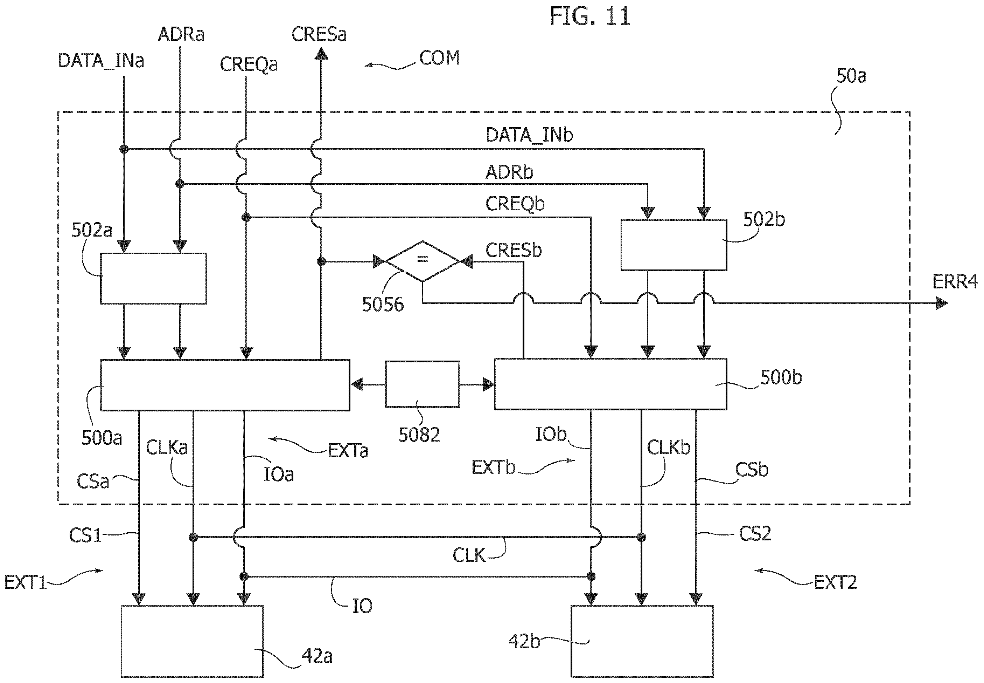

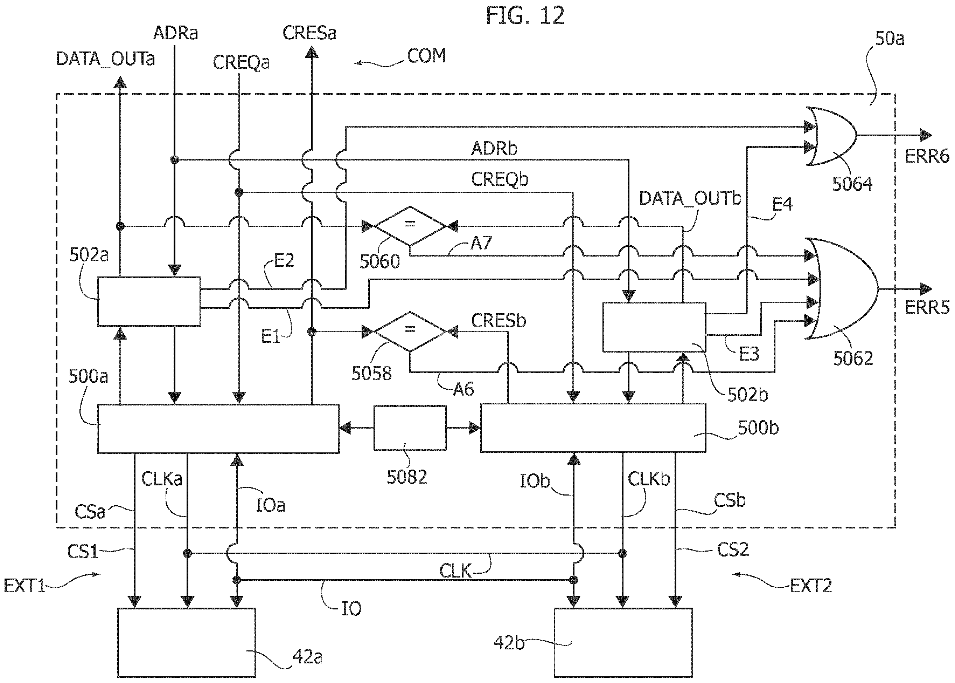

Figures 11 and 12 show an embodiment of the third operating mode. Specifically, Figure 11 shows the scenario when the memory controller subsystem 50a receives a write request and Figure 12 shows the scenario when the memory controller subsystem 50a receives a read request.

Specifically, in the embodiment considered, the first memory controller 500a is configured to interface a first external memory 42a and the second memory controller 500b is configured to interface a second external memory 42b. Moreover, the first memory controller 500a and the second memory controller 500b are configured to store the same data to the first and second memories 42a and 42b, thereby essentially duplicating the content of the memory 42a to the memory 42b. In fact, in this way, the comparison circuit 504 may be configured to verify whether the data read via the first memory controller 500a from the first memory 42a correspond to the data read via the second memory controller 500b from the second memory 42b, thereby also verifying the operation of the memory 42a.

In various embodiments, the memory controller subsystem 50a may also use the first and second ECC circuits 502a and 502b. Specifically, in various embodiments, when receiving a write request, the first ECC circuit 502a and the first memory controller 500a are configured to store additional ECC bits to the memory 42a. Similarly, the second ECC circuit 502b and the second memory controller 500b are configured to store additional ECC bits to the memory 42b. Moreover, when receiving a read request, the ECC circuit 502a and the memory controller 500a are configured to verify the ECC bits read from the memory 42a. Similarly, the ECC circuit 502b and the memory controller 500b are configured to verify the ECC bits read from the memory 42b. In this case, the comparison circuit 504 may be configured to verify also the operation of the first ECC circuit 502a.

Specifically, in the embodiment shown in Figure 11, in response to receiving a write request, the first switching circuit 506 is configured to forward the communication COM to the first memory controller 500a, which thus receives an address ADRa (e.g., obtained via an address mapping of the address ADR of the communication COM), the respective data DATA_INa of the write request and the respective request control signals CREQa (received via the communication COM).

In various embodiments, the first ECC circuit 502a may be configured to calculate ECC bits as a function of the received data DATA_INa and optionally the address ADRa.

Accordingly, in various embodiments, when receiving via the communication COM a write request comprising an address ADR associated with the memory controller 500a, the memory controller 500a uses the signals EXTa in order to write the respective data DATA_INa (corresponding to the data received via the communication COM from the communication system 52) and the optional ECC bits generated by the ECC circuit 502a to the memory 42a, e.g., by asserting the chip-select signal CSa, generating a clock signal CLKa and transmitting the memory address ADRa, the data DATA_INa and optionally the ECC bits via the signals IOa. As mentioned before, in order to interface the memory 42a, the second switching circuit 508 may connect the signals EXTa to the signals EXT1, e.g., the signals CSa, CLKa and IOa may correspond to the signals CS1, CLK and IO, respectively.

In various embodiments, the first switching circuit 506 is configured to provide the signals ADRa, DATA_INa and CREQa as respective signals ADRb, DATA_INb and CREQb to the second memory controller 500b. In this respect, when using the first ECC circuit 502a, the second ECC circuit 502b may be configured to calculate second ECC bits as a function of the received data DATA_INb (i.e., DATA_INa) and optionally the address ADRb (i.e., ADRa).

Accordingly, in various embodiments, when receiving a write request, also the memory controller 500b generates the signals EXTb in order to write the respective data DATA_INb (i.e., DATA_INa) and the optional ECC bits generated by the second ECC circuit 502b to the external memory 42b, e.g., by asserting the chip-select signal CSb, generating a clock signal CLKb and transmitting the memory address ADRb, the data DATA_INb and optionally the ECC bits via signals IOb. As mentioned before, in order to interface the memory 42b, the second switching circuit 508 may connect the signals EXTb to the signals EXT2, e.g., the signals CSb, CLKb and IOb may correspond to the signals CS2, CLK and IO, respectively.

Specifically, when using shared signals CLK and IO, indeed only one of the memory controllers 500a and 500b may transmit data during a given cycle. Accordingly, in this case, the memory controller subsystem 50a, may comprise a selection circuit 5082 configured to indicate one of the memory controllers 500a and 500b permitted to access the shared signals CLK and IO. For example, the selection circuit 5082 may be implemented with an arbiter. Accordingly, once having received a write request via the signals COM, the selection circuit 5082 may select one of the memory controllers 500a and 500b, e.g., the memory controller 500a, which thus may write the received data to the respective external memory, e.g., the memory 42a. Next, the selection circuit 5082 may select the other memory controller 500a or 500b, e.g., the memory controller 500b, which thus may write the received data to the respective external memory, e.g., the memory 42b.

In various embodiments, the comparison circuit 504 may be configured to verify one or more signals generated by the memory controllers 500a or 500b. For example, in the embodiments considered, the comparison circuit 504 comprises a comparison circuit 5056 configured to assert an error signal ERR4 when the response control signals CRESa and CRESb generated by the memory controllers 500a or 500b do not correspond once both write operations have been completed. For example, the comparison circuit 5056 may correspond to the comparison circuit 5042 shown in Figure 9 and/or the comparison circuit 5048 shown in Figure 10, which are used for the second operating mode.

Conversely, in the embodiment shown in Figure 12, in response to receiving a read request, the first switching circuit 506 is again configured to forward the communication COM to the first memory controller 500a, which thus receives an address ADRa (e.g., obtained via an address mapping of the address ADR of the communication COM) and the request control signal CREQa indicating a read request.

Specifically, in the embodiment considered, the first memory controller 500a and the second memory controller 500b are again configured to interface respective external memories 42a and 42b, while and the comparison circuit 504 is configured to compare one or more signals generated by the memory controller 500a and 500b and/or the ECC circuits 502a and 502b.

Accordingly, in various embodiments, when receiving a read request comprising an address ADR associated with the memory controller 500a, the memory controller 500a uses the signals EXTa in order to read respective data DATA_OUTa from the memory 42a, e.g., by asserting the chip-select signal CSa, generating the clock signal CLKa and transmitting the memory address ADRa via signals IOa. As mentioned before, in order to interface the memory 42a, the second switching circuit 508 may connect the signals EXTa to the signals EXT1, e.g., the signals CSa, CLKa and IOa may correspond to the signals CS1, CLK and IO, respectively.

In various embodiments, when having written ECC bits to the memory in response to a write request, the memory controller 500a receives thus also ECC bits via the signals IOa, i.e., the lines IO. Accordingly, in this case, the memory controller 500a may provide the received ECC bits, the received data DATA_OUTa and optionally the address ADRa to the first ECC circuit 502a, which thus may calculate further ECC bits as a function of the data DATA_OUTa and optionally the address ADRa (based on the used ECC scheme), and assert an error signal E1 when the received ECC bits do not correspond to the calculated ECC bits.

As described in the foregoing, in various embodiments, the first ECC circuit 502a may also be configured to generate corrected data DATA_OUTa by comparing the received ECC bits with the calculated ECC bits. Specifically, in this case, the ECC circuit 502a may assert:
- the error signal E1 when an uncorrectable error is detected, e.g., a double bit error in case of a SECDED ECC code;
- the error signal E2 when a correctable error is detected, e.g., a single bit error with a SECDED code.

In various embodiments, the signals ADRa and CREQa are also provides as respective signals ADRb and CREQb to the second memory controller 500b. Accordingly, in various embodiments, when receiving a read request, also the memory controller 500b uses the signals EXTb in order to read respective data DATA_OUTb from the memory 42b, e.g., by asserting the chip-select signal CSb, generating the clock signal CLKb and transmitting the memory address ADRb (corresponding to the memory address ADRa) via signals IOb. As mentioned before, in order to interface the memory 42b, the second switching circuit 508 may connect the signals EXTb to the signals EXT2, e.g., the signals CSb, CLKb and IOb may correspond to the signals CS2, CLK and IO, respectively.

In various embodiments, when having written ECC bits to the memory in response to a write request, the memory controller 500b receives thus also ECC bits via the signals IOb, i.e., the lines IO. Accordingly, in this case, the memory controller 500b may provide the received ECC bits, the received data DATA_OUTb and optionally the address ADRb (i.e., ADRa) to the second ECC circuit 502b, which thus may calculate further ECC bits as a function of the received data DATA_OUTb and optionally the address ADRb, and assert an error signal E3 when the received ECC bits do not correspond to the calculated ECC bits.

In various embodiments, similar to the ECC circuit 502a, the second ECC circuit 502b may also be configured to generate corrected data DATA_OUTb by comparing the received ECC bits with the calculated ECC bits. Specifically, in this case, the ECC circuit 502b may assert:
- the error signal E3 when an uncorrectable error is detected, e.g., a double bit error in case of a SECDED ECC code; and
- an error signal E4 when a correctable error is detected, e.g., a single bit error with a SECDED code.

Also in this case, when using shared signals CLK and IO, indeed only one of the memory controllers 500a and 500b may exchange data during a given cycle. Accordingly, in this case, the selection circuit 5082 may be configured to indicate one of the memory controllers 500a and 500b permitted to access the shared signals CLK and IO. Accordingly, once having received a read request via the signals COM, the selection circuit 5082 may select one of the memory controllers 500a and 500b, e.g., the memory controller 500a, which thus may communicate with the respective external memory, e.g., the memory 42a. Next, the selection circuit 5082 may select the other memory controller 500a or 500b, e.g., the memory controller 500b, which thus may communicate with the respective external memory, e.g., the memory 42b.

In various embodiments, the comparison circuit 504 may be configured to verify one or more signals generated by the memory controllers 500a or 500b.

For example, in the embodiments considered, the comparison circuit 504 comprises a comparison circuit 5058 configured to assert an error signal A6 in response to determining that the response control signals CRESa and CRESb generated by the memory controllers 500a or 500b do not correspond once both write operations have been completed. For example, the comparison circuit 5058 may correspond to the comparison circuit 5056 shown in Figure 11.

Additionally or alternatively, the comparison circuit 504 may comprise a comparison circuit 5060 configured to compare the signals DATA_OUTa and DATA_OUTb (provided by the memory controllers 500a and 500b, or the corrected data provided by the ECC circuits 502a and 502b), and assert an error signal A7 in response to determining that the signals the signals DATA_OUTa and DATA_OUTb do not correspond. For example, the comparison circuit 5060 may correspond to the comparison circuit 5050 shown in Figure 10.

In various embodiments, the comparison circuit 504 may comprise thus a combinational logic circuit 5062, e.g., an OR gate, configured to generate a combined error signal ERR2 indicating an uncorrectable error, wherein the combinational logic circuit 5062 is configured to assert the combined error signal ERR5 in response to determining that at least one of the error signals A6, A7, E1 and E3 (when used) is asserted. In various embodiments, one or more of the error signals A6, A7, E1, E3 and/or ERR5 are provided to a fault collection and error management circuit of the processing system 10a.

In various embodiments, the comparison circuit 504 may comprise also a combinational logic circuit 5064, e.g., an OR gate, configured to generate a combined error signal ERR6 indicating a correctable error, wherein the combinational logic circuit 5064 is configured to assert the combined error signal ERR6 in response to determining that at least one of the error signals E2 and E4 is asserted. In various embodiments, one or more of the error signals E2, E4 and/or ERR6 are provided to the fault collection and error management circuit of the processing system 10a. For example, the combinational logic circuit 5064 may correspond to the combinational logic circuit 5054 shown in Figure 10.

Accordingly, in the embodiments shown in Figures 11 and 12, a first memory 42a is connected (via the switching circuit 508) to the memory controller 500a, and a second (preferably identical) memory 42b is connected to the second memory controller 500b. The two memories 42a and 42b, and the memory controllers 500a and 500b are essentially used in duplicated mode.

The third operating mode shown in Figures 11 and 12 permits to obtain an ASIL-D configuration, because the whole path from the communication system 52 till the device interfaces EXT1 and EXT2 to the external memories 42a and 42b is protected. In addition, an ECC code may be calculated over the data DATA_INa and memory address ADRa and appended to the data DATA_INa written in the external memories 42a and 42b, which may then be verified for each read operation. Possible malfunctions within the external memories 42a and 42b are covered by the duplication.

Accordingly, in various embodiments, the memory controller subsystem 50a supports a plurality of operation modes, wherein one operating mode is selected based on (e.g., static) configuration data CD. For example, the configuration may be selected based on the type and quantity of data to be stored to the external memory 42a or memories 42a and 42b, and the required protection.

Substantially, the first operating mode permits to use the complete memory space of two external memories 42a and 42b. While not shown explicitly in Figures 7 and 8, also in this operating mode may be used the ECC circuits 502a and 502b (similar to what is shown in Figures 11 and 12), in order to store additional ECC bits to the memories 42a and 42b.

Conversely, the second and third operating mode use the second memory controller 500b and the comparison circuit 508 in order to verify the operation of the first memory controller 500a. In this respect, when using the first ECC circuit 502a, the second ECC circuit 502b and the comparison circuit 508 are configured to verify the operation of the first ECC circuit 502a. Specifically, in both operating modes, the comparison circuit 508 is configured to compare the signals COMa and COMb generated by the memory controllers 500a and 500b. For example, the comparison circuits 5042, 5048, 5056 and 5058 (possibly corresponding to the same comparison circuit) are configured to compare the response control signals CRESa and CRESb, and the comparison circuits 5050 and 5060 (possibly corresponding to the same comparison circuit) are configured to compare the response data DATA_OUTa and DATA_OUTb.

In the third operating mode, this comparison is sufficient because the memory controllers 500a and 500b interface separately two memories 42a and 42b with data duplication. Conversely, in the second operating mode, the memory controllers 500a and 500b interface a single memory 42a, but additional comparison circuits 5040 and 5046 (possibly corresponding to the same comparison circuit) are configured to compare at least part of the signals EXTa and EXTb generated by the memory controllers 500a and 500b. Specifically, in various embodiments, the comparison circuits 5040 and 5046 (possibly corresponding to the same comparison circuit) are configured to compare the signals IOa and IOb, at least during the cycles when the memory controllers 500a and 500b apply data to these signals, e.g., for transmitting a write request and the respective data, or a read request. As mentioned before, the comparison circuit 508 may also be configured to compare the clock signals CLKa and CLKb, and/or the chip-select signals CSa and CSb.

## Claims

1. A processing system (10a) integrated in an integrated circuit (40), said processing system (10a) comprising:
- a communication system (52; 114);
- a memory controller subsystem (50a) configured to interface a memory (42a) external with respect to said integrated circuit (40);
- a master circuit (54; 102, 110) configured to send write and read requests via said communication system (54; 114) to said memory controller subsystem (50a) to store data to and read data from said memory (42a);
wherein said memory controller subsystem (50a) is connected to said communication system (52; 114) and a communication channel (EXT1, EXT2) connected to terminals of said integrated circuit (40) configured to be connected to said memory (42a), wherein said communication channel (EXT1, EXT2) comprises a data signal (IO),
wherein said memory controller subsystem (50a) comprises a first memory controller (500a) and a second memory controller (500b), wherein each of said first memory controller (500a) and said second memory controller (500b) is configured to:
- receive a write or read request comprising data indicating a memory address (ADRa, ADRb) and, in case of a write request, respective data (DATA_INa, DATA_INb) to be stored;
- in response to receiving a write request:
- extract the respective memory address (ADRa, ADRb) and the respective data to be stored (DATA_INa, DATA_INb) from the write request, and
- generate a respective first or second communication (EXTa, EXTb) for storing the respective extracted data (DATA_INa, DATA_INb) to the respective extracted memory address (ADRa, ADRb) by generating a respective first or second data signal (IOa, IOb) used to transmit the respective extracted memory address (ADRa, ADRb) and the respective extracted data (DATA_INa, DATA_INb);
- in response to receiving a read request:
- extract the respective memory address (ADRa, ADRb) from the read request,
- generate the respective first or second communication (EXTa, EXTb) for receiving data (DATA_OUTa, DATA_OUTb) associated with said extracted memory address (ADRa, ADRb) by generating the respective first or second data signal (IOa, IOb) in order to transmit the respective extracted memory address (ADRa, ADRb) and receive the respective data (DATA_OUTa, DATA_OUTb) associated with said extracted memory address (ADRa, ADRb), and
- generate a respective first or second response comprising the respective received data (DATA _OUTa, DATA_OUTb);
wherein, in a first operating mode, the first communication (EXTa) of said first memory controller (500a) is connected (508) to said communication channel (EXT1, EXT2), whereby said first data signal (IOa) corresponds to said data signal (IO), and said memory controller subsystem (50a) is configured to:
- in response to receiving from said communication system (52; 114) a write request:
- forward (506, COMa, COMb) said received write request to said first memory controller (500a) and said second memory controller (500b), whereby said first memory controller (500a) generates the respective first data signal (IOa) used to transmit the respective extracted memory address (ADRa) and the respective extracted data (DATA_INa) and said second memory controller (500b) generates the respective second data signal (IOb) used to transmit the respective extracted memory address (ADRb) and the respective extracted data (DATA_INb);
- compare (5040) said first data signal (IOa) with said second data signal (IOb) and, in response to determining that said first data signal (IOa) does not correspond to said second data signal (IOb), assert a first error signal (A1);
- in response to receiving from said communication system (52; 114) a read request:
- forward (506, COMa, COMb) said received read request to said first memory controller (500a) and said second memory controller (500b), whereby said first memory controller (500a) generates the respective first data signal (IOa) used to transmit the respective extracted memory address (ADRa) and receive the respective data (DATA_OUTa) associated with the respective extracted memory address (ADRa) and said second memory controller (500b) generates the respective second data signal (IOb) used to transmit the respective extracted memory address (ADRb) and receive the respective data (DATA_OUTb) associated with the respective extracted memory address (ADRb), and said first memory controller (500a) generates the respective response comprising the respective received data (DATA_OUTa) and said second memory controller (500b) generates the respective response comprising the respective received data (DATA _OUTb);
- in response to determining that said first memory controller (500a) transmits said extracted memory address (ADRa) via said first data signal (IOa), compare (5046) said first data signal (IOa) with said second data signal (IOb) and, in response to determining that said first data signal (IOa) does not correspond to said second data signal (IOb), assert a second error signal (A3);
- in response to determining that said first memory controller (500a) receives the respective data (DATA_OUTa) via said first data signal (IOa), connect (5080) said first data signal (IOa) to said second data signal (IOb), compare (5050) the first response generated by said first memory controller (500a) with the second response generated by said second memory controller (500b) and, in response to determining that said first response does not correspond to said second response, assert a third error signal (A5).

2. The processing system according to Claim 1, wherein said communication channel (EXT1, EXT2) is a shared communication channel, and wherein, in a second operating mode, the first communication (EXTa) of said first memory controller (500a) and the second communication (EXTb) of said second memory controller (500b) are connected (508) to said communication channel (EXT1, EXT2), whereby said first data signal (IOa) and said second data signal (IOb) correspond to said data signal (IO), and said memory controller subsystem (50a) is configured to:
- in response to receiving from said communication system (52; 114) a write request:
- select (5082) one of said first memory controller (500a) and said second memory controller (500b),
- forward (506, COMa, COMb) the received write request to said one memory controller (500a; 500b), whereby said one memory controller (500a; 500a) generates the respective first data signal (IOa; IOb) used to transmit the respective extracted memory address (ADRa; ADRb) and the respective extracted data (DATA_INa; DATA_INb),
- select (5082) the other one of said first memory controller (500a) and said second memory controller (500b),
- forward (506, COMa, COMb) the received write request to said other one memory controller (500a; 500b), whereby said other one memory controller (500a; 500b) generates the respective first data signal (IOa; IOb) used to transmit the respective extracted memory address (ADRa; ADRb) and the respective extracted data (DATA_INa; DATA_INb);
- in response to receiving from said communication system (52; 114) a read request:
- select (5082) one of said first memory controller (500a) and said second memory controller (500b),
- forward (506, COMa, COMb) said received read request to said one memory controller (500a; 500b), whereby said one memory controller (500a; 500b) generates the respective data signal (IOa; IOb) used to transmit the respective extracted memory address (ADRa; ADRb) and receives the respective data (DATA_OUTa; DATA _OUTb) associated with the respective extracted memory address (ADRa; ADRb), and said one memory controller (500a; 500b) generates the respective response comprising the respective received data (DATA _OUTa; DATA_OUTb),
- select (5082) the other one of said first memory controller (500a) and said second memory controller (500b),
- forward (506, COMa, COMb) said received read request to said other one memory controller (500a; 500b), whereby said other one memory controller (500a; 500b) generates the respective data signal (IOa; IOb) used to transmit the respective extracted memory address (ADRa; ADRb) and receives the respective data (DATA _OUTa; DATA _OUTb) associated with the respective extracted memory address (ADRa; ADRb), and said other one memory controller (500a; 500b) generates the respective response comprising the respective received data (DATA _OUTa; DATA_OUTb),
- compare (5060) the first response generated by said first memory controller (500a) with the second response generated by said second memory controller (500b) and, in response to determining that said first response does not correspond to said second response, assert a fourth error signal (A7).

3. The processing system according to Claim 1 or Claim 2, wherein said first and said second response comprises respective first and second response control signals (CRESa, CRESb) and wherein, in said first operating mode and/or said second operating mode, said memory controller subsystem (50a) is configured to compare (5042, 5048, 5056, 5058) the first response control signals (CRESa) generated by said first memory controller (500a) with the second response control signals (CRESb) generated by said second memory controller (500b) and, in response to determining that said first response control signals (CRESa) do not correspond to said second response control signals (CRESb), assert a fifth error signal (A2, A4, ERR4, A6).

4. The processing system according to any of the previous claims, wherein said communication channel (EXT1, EXT2) is a shared communication channel, and wherein, in a third operating mode, the first communication (EXTa) of said first memory controller (500a) and the second communication (EXTb) of said second memory controller (500b) are connected (508) to said communication channel (EXT1, EXT2), whereby said first data signal (IOa) and said second data signal (IOb) correspond to said data signal (IO), and said memory controller subsystem (50a) is configured to:
- in response to receiving from said communication system (52; 114) a write request:
- determine whether the write request comprises data indicating a memory address (ADRa) associated with said first memory controller (500a) or data indicating a memory address (ADRb) associated with said second memory controller (500b),
- in response to determining that the write request comprises data indicating a memory address (ADRa) associated with said first memory controller (500a), forward (506, COMa, COMb) the received write request to said first memory controller (500a), whereby said first memory controller (500a) generates the respective first data signal (IOa) used to transmit the respective extracted memory address (ADRa) and the respective extracted data (DATA_INa), and
- in response to determining that the write request comprises data indicating a memory address (ADRb) associated with said second memory controller (500b), forward (506, COMa, COMb) the received write request to said second memory controller (500b), whereby said second memory controller (500b) generates the respective second data signal (IOb) used to transmit the respective extracted memory address (ADRb) and the respective extracted data (DATA_INb),
- in response to receiving from said communication system (52; 114) a read request:
- determine whether the read request comprises data indicating a memory address (ADRa) associated with said first memory controller (500a) or data indicating a memory address (ADRb) associated with said second memory controller (500b),
- in response to determining that the read request comprises data indicating a memory address (ADRa) associated with said first memory controller (500a), forward (506, COMa, COMb) said received read request to said first memory controller (500a), whereby said first memory controller (500a) generates the respective data signal (IOa) used to transmit the respective extracted memory address (ADRa) and receives the respective data (DATA_OUTa) associated with the respective extracted memory address (ADRa), and said first memory controller (500a) generates the respective response comprising the respective received data (DATA_OUTa),
- in response to determining that the read request comprises data indicating a memory address (ADRb) associated with said second memory controller (500b), forward (506, COMa, COMb) said received read request to said second memory controller (500b), whereby said second memory controller (500b) generates the respective data signal (IOb) used to transmit the respective extracted memory address (ADRb) and receives the respective data (DATA _OUTb) associated with the respective extracted memory address (ADRb), and said second memory controller (500a) generates the respective response comprising the respective received data (DATA_OUTb).

5. The processing system according to any of the previous claims, wherein said shared communication channel (EXT1, EXT2) comprises a first chip-enable signal (CS1) adapted to enable a first memory (42a) and a second chip-enable signal (CS2) adapted to enable a second memory (42b), and wherein said first memory controller (500a) is configured to assert said first chip select signal (CS1) when transmitting or receiving data via said first data signal (IOa) and said second memory controller (500b) is configured to assert said second chip select signal (CS2) when transmitting or receiving data via said second data signal (IOb).

6. The processing system according to Claim 5, wherein said shared communication channel (EXT1, EXT2) is a Serial Peripheral Interface Bus (SPI) or OctalSPI.

7. The processing system according to any of the previous claims, wherein said memory controller subsystem (50a) comprises a first Error-Correction Code, ECC, circuit (502a) associated with said first memory controller (500a) and a second ECC circuit (502a) associated with said second memory controller (500b), wherein each of said first memory controller (500a) and said second memory controller (500b) is configured to:
- in response to receiving a write request:
- calculate via the respective first or second ECC circuit (502a, 502b) ECC bits,
- transmit the respective extracted memory address (ADRa, ADRb), the respective extracted data (DATA_INa, DATA_INb) and the respective calculated ECC bits;
- in response to receiving a read request:
- transmit the respective extracted memory address (ADRa, ADRb) and receive the respective data (DATA_OUTa, DATA_OUTb) and respective ECC bits;
- calculate via the respective first or second ECC circuit (502a, 502b) further ECC bits,
- compare the further ECC bits with the received ECC bits and, in response to determining that the further ECC bits do not correspond to the received ECC bits, assert an ECC error signal (E1, E2, E3, E4).

8. The processing system according to Claim 7, wherein said first and second ECC circuits (502a, 502b) are error detection and correction circuits configured to generate corrected data (DATA_OUTa, DATA_OUTb), and wherein said first or second response comprises the respective corrected data (DATA _OUTa, DATA_OUTb).

9. The processing system according to Claim 7 or Claim 8, wherein said first and second ECC circuits (502a, 502b) are configured to calculate the respective ECC bits as a function of the respective extracted data (DATA_INa, DATA_INb) or received data (DATA_OUTa, DATA_OUTb) and the respective memory address (ADRa, ADRb).

10. The processing system according to any of the previous claims, wherein said memory controller subsystem comprises a control circuit (510) configured to receive configuration data (CD) and select one of said first, second or third operating mode as a function of said configuration data (CD).

11. A method of operating a processing system according to any of the previous claims, comprising in a first operating mode:
- connecting (508) said first memory controller (500a) to said communication channel (EXT1, EXT2), whereby said first data signal (IOa) corresponds to said data signal (IO),
- in response to receiving from said communication system (52; 114) a write request:
- forwarding (506, COMa, COMb) the received write request to the first memory controller (500a) and the second memory controller (500b), whereby the first memory controller (500a) generates the respective first data signal (IOa) used to transmit the respective extracted memory address (ADRa) and the respective extracted data (DATA_INa) and the second memory controller (500b) generates the respective second data signal (IOb) used to transmit the respective extracted memory address (ADRb) and the respective extracted data (DATA_INb);
- comparing (5040) the first data signal (IOa) with the second data signal (IOb) and, in response to determining that said first data signal (IOa) does not correspond to said second data signal (IOb), asserting a first error signal (A1);
- in response to receiving from said communication system (52; 114) a read request:
- forwarding (506, COMa, COMb) the received read request to the first memory controller (500a) and the second memory controller (500b), whereby the first memory controller (500a) generates the respective first data signal (IOa) used to transmit the respective extracted memory address (ADRa) and receive the respective data (DATA_OUTa) associated with the respective extracted memory address (ADRa) and the second memory controller (500b) generates the respective second data signal (IOb) used to transmit the respective extracted memory address (ADRb) and receive the respective data (DATA _OUTb) associated with the respective extracted memory address (ADRb), and the first memory controller (500a) generates the respective response comprising the respective received data (DATA_OUTa) and the second memory controller (500b) generates the respective response comprising the respective received data (DATA _OUTb);
- in response to determining that the first memory controller (500a) transmits the extracted memory address (ADRa) via the first data signal (IOa), comparing (5046) the first data signal (IOa) with the second data signal (IOb) and, in response to determining that said first data signal (IOa) does not correspond to said second data signal (IOb), asserting a second error signal (A3);
- in response to determining that the first memory controller (500a) receives the respective data (DATA_OUTa) via the first data signal (IOa), connecting (5080) the first data signal (IOa) to the second data signal (IOb), comparing (5050) the first response generated by the first memory controller (500a) with the second response generated by the second memory controller (500b) and, in response to determining that said first response does not correspond to said second response, asserting a third error signal (A5).

## Patentansprüche

1. Verarbeitungssystem (10a), das in eine integrierte Schaltung (40) integriert ist, wobei das Verarbeitungssystem (10a) Folgendes umfasst:
- ein Kommunikationssystem (52; 114);
- ein Speichersteuerungs-Subsystem (50a), das so konfiguriert ist, dass es eine Schnittstelle zu einem Speicher (42a) bildet, der in Bezug auf die integrierte Schaltung (40) außerhalb liegt;
- eine Masterschaltung (54; 102, 110), die so konfiguriert ist, dass sie Schreib- und Leseanforderungen über das Kommunikationssystem (54; 114) an das Speichersteuerungs-Subsystem (50a) sendet, um Daten in dem Speicher (42a) zu speichern und aus diesem zu lesen;
wobei das Speichersteuerungs-Subsystem (50a) mit dem Kommunikationssystem (52; 114) und einem Kommunikationskanal (EXT1, EXT2) verbunden ist, der mit Anschlüssen der integrierten Schaltung (40) verbunden ist, die so konfiguriert sind, dass sie mit dem Speicher (42a) verbunden werden kann, wobei der Kommunikationskanal (EXT1, EXT2) ein Datensignal (IO) umfasst,
wobei das Speichersteuerungs-Subsystem (50a) eine erste Speichersteuerung (500a) und eine zweite Speichersteuerung (500b) umfasst, wobei jede der ersten Speichersteuerung (500a) und der zweiten Speichersteuerung (500b) für Folgendes konfiguriert ist:
- Empfangen einer Schreib- oder Leseanforderung, die Daten, die eine Speicheradresse (ADRa, ADRb) angeben, und im Falle einer Schreibanforderung jeweilige zu speichernde Daten (DATA_INa, DATA_INb) umfasst;
- als Antwort auf das Empfangen einer Schreibanforderung:
- Extrahieren der jeweiligen Speicheradresse (ADRa, ADRb) und der jeweiligen zu speichernden Daten (DATA_INa, DATA_INb) aus der Schreibanforderung, und
- Erzeugen einer jeweiligen ersten oder zweiten Kommunikation (EXTa, EXTb) zum Speichern der jeweiligen extrahierten Daten (DATA_INa, DATA_INb) an der jeweiligen extrahierten Speicheradresse (ADRa, ADRb) durch Erzeugen eines jeweiligen ersten oder zweiten Datensignals (IOa, IOb), das zum Übertragen der jeweiligen extrahierten Speicheradresse (ADRa, ADRb) und der jeweiligen extrahierten Daten (DATA_INa, DATA_INb) verwendet wird;
- als Antwort auf das Empfangen einer Leseanforderung:
- Extrahieren der jeweiligen Speicheradresse (ADRa, ADRb) aus der Leseanforderung,
- Erzeugen der jeweiligen ersten oder zweiten Kommunikation (EXTa, EXTb) zum Empfangen von Daten (DATA_OUTa, DATA_OUTb), die der extrahierten Speicheradresse (ADRa, ADRb) zugeordnet sind, durch Erzeugen des jeweiligen ersten oder zweiten Datensignals (IOa, IOb), um die jeweilige extrahierte Speicheradresse (ADRa, ADRb) zu übertragen und die jeweiligen Daten (DATA_OUTa, DATA_OUTb), die der extrahierten Speicheradresse (ADRa, ADRb) zugeordnet sind, zu empfangen, und
- Erzeugen einer jeweiligen ersten oder zweiten Antwort, die die jeweiligen empfangenen Daten (DATA_OUTa, DATA_OUTb) umfasst;
wobei in einem ersten Betriebsmodus die erste Kommunikation (EXTa) der ersten Speichersteuerung (500a) mit dem Kommunikationskanal (EXT1, EXT2) verbunden ist (508), wobei das erste Datensignal (IOa) dem Datensignal (IO) entspricht und das Speichersteuerungs-Subsystem (50a) für Folgendes konfiguriert ist:
- als Antwort auf das Empfangen einer Schreibanforderung von dem Kommunikationssystem (52; 114):
- Weiterleiten (506, COMa, COMb) der empfangenen Schreibanforderung an die erste Speichersteuerung (500a) und die zweite Speichersteuerung (500b), wobei die erste Speichersteuerung (500a) das jeweilige erste Datensignal (IOa) erzeugt, das zum Übertragen der jeweiligen extrahierten Speicheradresse (ADRa) und der jeweiligen extrahierten Daten (DATA_INa) verwendet wird, und die zweite Speichersteuerung (500b) das jeweilige zweite Datensignal (IOb) erzeugt, das zum Übertragen der jeweiligen extrahierten Speicheradresse (ADRb) und der jeweiligen extrahierten Daten (DATA_INb) verwendet wird;
- Vergleichen (5040) des ersten Datensignals (IOa) mit dem zweiten Datensignal (IOb) und als Antwort auf das Bestimmen, dass das erste Datensignal (IOa) nicht dem zweiten Datensignal (IOb) entspricht, Aktivieren eines ersten Fehlersignals (A1);
- als Antwort auf das Empfangen einer Leseanforderung von dem Kommunikationssystem (52; 114):
- Weiterleiten (506, COMa, COMb) der empfangenen Leseanforderung an die erste Speichersteuerung (500a) und die zweite Speichersteuerung (500b), wobei die erste Speichersteuerung (500a) das jeweilige erste Datensignal (IOa) erzeugt, das zum Übertragen der jeweiligen extrahierten Speicheradresse (ADRa) und zum Empfangen der jeweiligen Daten (DATA_OUTa), die der jeweiligen extrahierten Speicheradresse (ADRa) zugeordnet sind, verwendet wird, und die zweite Speichersteuerung (500b) das jeweilige zweite Datensignal (IOb) erzeugt, das zum Übertragen der jeweiligen extrahierten Speicheradresse (ADRb) und Empfangen der jeweiligen Daten (DATA_OUTb), die der jeweiligen extrahierten Speicheradresse (ADRb) zugeordnet sind, verwendet wird, und die erste Speichersteuerung (500a) die jeweilige Antwort erzeugt, die die jeweiligen empfangenen Daten (DATA_OUTa) umfasst, und die zweite Speichersteuerung (500b) die jeweilige Antwort erzeugt, die die jeweiligen empfangenen Daten (DATA_OUTb) umfasst;
- als Antwort auf das Bestimmen, dass die erste Speichersteuerung (500a) die extrahierte Speicheradresse (ADRa) über das erste Datensignal (IOa) überträgt, Vergleichen (5046) des ersten Datensignals (IOa) mit dem zweiten Datensignal (IOb) und als Antwort auf das Bestimmen, dass das erste Datensignal (IOa) nicht dem zweiten Datensignal (IOb) entspricht, Aktivieren eines zweiten Fehlersignals (A3);
- als Antwort auf das Bestimmen, dass die erste Speichersteuerung (500a) die jeweiligen Daten (DATA_OUTa) über das erste Datensignal (IOa) empfängt, Verbinden (5080) des ersten Datensignals (IOa) mit dem zweiten Datensignal (IOb), Vergleichen (5050) der von der ersten Speichersteuerung (500a) erzeugten ersten Antwort mit der von der zweiten Speichersteuerung (500b) erzeugten zweiten Antwort, und als Antwort auf das Bestimmen, dass die erste Antwort nicht der zweiten Antwort entspricht, Aktivieren eines dritten Fehlersignals (A5).

2. Verarbeitungssystem nach Anspruch 1, wobei der Kommunikationskanal (EXT1, EXT2) ein gemeinsamer Kommunikationskanal ist, und wobei in einem zweiten Betriebsmodus die erste Kommunikation (EXTa) der ersten Speichersteuerung (500a) und die zweite Kommunikation (EXTb) der zweiten Speichersteuerung (500b) mit dem Kommunikationskanal (EXT1, EXT2) verbunden sind (508), wobei das erste Datensignal (IOa) und das zweite Datensignal (IOb) dem Datensignal (IO) entsprechen und das Speichersteuerungs-Subsystem (50a) für Folgendes konfiguriert ist:
- als Antwort auf das Empfangen einer Schreibanforderung von dem Kommunikationssystem (52; 114):
- Auswählen (5082) einer der ersten Speichersteuerung (500a) und der zweiten Speichersteuerung (500b),
- Weiterleiten (506, COMa, COMb) der empfangenen Schreibanforderung an die eine Speichersteuerung (500a; 500b), wobei die eine Speichersteuerung (500a; 500a) das jeweilige erste Datensignal (IOa; IOb) erzeugt, das zum Übertragen der jeweiligen extrahierten Speicheradresse (ADRa; ADRb) und der jeweiligen extrahierten Daten (DATA_INa; DATA_INb) verwendet wird,
- Auswählen (5082) der anderen der ersten Speichersteuerung (500a) und der zweiten Speichersteuerung (500b),
- Weiterleiten (506, COMa, COMb) der empfangenen Schreibanforderung an die andere Speichersteuerung (500a; 500b), wobei die andere Speichersteuerung (500a; 500b) das jeweilige erste Datensignal (IOa; IOb) erzeugt, das zum Übertragen der jeweiligen extrahierten Speicheradresse (ADRa; ADRb) und der jeweiligen extrahierten Daten (DATA_INa; DATA_INb) verwendet wird;
- als Antwort auf das Empfangen einer Leseanforderung von dem Kommunikationssystem (52; 114):
- Auswählen (5082) einer der ersten Speichersteuerung (500a) und der zweiten Speichersteuerung (500b),
- Weiterleiten (506, COMa, COMb) der empfangenen Leseanforderung an die eine Speichersteuerung (500a; 500b), wobei die eine Speichersteuerung (500a; 500b) das jeweilige Datensignal (IOa; IOb) erzeugt, das zum Übertragen der jeweiligen extrahierten Speicheradresse (ADRa; ADRb) verwendet wird, und die jeweiligen Daten (DATA_OUTa; DATA_OUTb) empfängt, die der jeweiligen extrahierten Speicheradresse (ADRa; ADRb) zugeordnet sind, und die eine Speichersteuerung (500a; 500b) die jeweilige Antwort erzeugt, die die jeweiligen empfangenen Daten (DATA_OUTa; DATA_OUTb) umfasst,
- Auswählen (5082) der anderen der ersten Speichersteuerung (500a) und der zweiten Speichersteuerung (500b),
- Weiterleiten (506, COMa, COMb) der empfangenen Leseanforderung an die andere Speichersteuerung (500a; 500b), wobei die andere Speichersteuerung (500a; 500b) das jeweilige Datensignal (IOa; IOb) erzeugt, das zum Übertragen der jeweiligen extrahierten Speicheradresse (ADRa; ADRb) verwendet wird, und die jeweiligen Daten (DATA_OUTa; DATA_OUTb) empfängt, die der jeweiligen extrahierten Speicheradresse (ADRa; ADRb) zugeordnet sind, und die andere Speichersteuerung (500a; 500b) die jeweilige Antwort erzeugt, die die jeweiligen empfangenen Daten (DATA_OUTa; DATA_OUTb) umfasst,
- Vergleichen (5060) der von der ersten Speichersteuerung (500a) erzeugten ersten Antwort mit der von der zweiten Speichersteuerung (500b) erzeugten zweiten Antwort und, als Antwort auf das Bestimmen, dass die erste Antwort nicht der zweiten Antwort entspricht, Aktivieren eines vierten Fehlersignals (A7).

3. Verarbeitungssystem nach Anspruch 1 oder Anspruch 2, wobei die erste und die zweite Antwort jeweils erste und zweite Antwortsteuersignale (CRESa, CRESb) umfassen und wobei in dem ersten Betriebsmodus und/oder dem zweiten Betriebsmodus das Speichersteuerungs-Subsystem (50a) so konfiguriert ist, dass es die von der ersten Speichersteuerung (500a) erzeugten ersten Antwortsteuersignale (CRESa) mit den von der zweiten Speichersteuerung (500b) erzeugten zweiten Antwortsteuersignalen (CRESb) vergleicht (5042, 5048, 5056, 5058) und als Antwort auf das Bestimmen, dass die ersten Antwortsteuersignale (CRESa) nicht den zweiten Antwortsteuersignalen (CRESb) entsprechen, ein fünftes Fehlersignal (A2, A4, ERR4, A6) aktiviert.

4. Verarbeitungssystem nach einem der vorhergehenden Ansprüche, wobei der Kommunikationskanal (EXT1, EXT2) ein gemeinsamer Kommunikationskanal ist, und wobei in einem dritten Betriebsmodus die erste Kommunikation (EXTa) der ersten Speichersteuerung (500a) und die zweite Kommunikation (EXTb) der zweiten Speichersteuerung (500b) mit dem Kommunikationskanal (EXT1, EXT2) verbunden sind (508), wobei das erste Datensignal (IOa) und das zweite Datensignal (IOb) dem Datensignal (IO) entsprechen und das Speichersteuerungs-Subsystem (50a) für Folgendes konfiguriert ist:
- als Antwort auf das Empfangen einer Schreibanforderung von dem Kommunikationssystem (52; 114):
- Bestimmen, ob die Schreibanforderung Daten umfasst, die eine Speicheradresse (ADRa) angeben, die der ersten Speichersteuerung (500a) zugeordnet ist, oder Daten, die eine Speicheradresse (ADRb) angeben, die der zweiten Speichersteuerung (500b) zugeordnet ist,
- als Antwort auf das Bestimmen, dass die Schreibanforderung Daten umfasst, die eine Speicheradresse (ADRa) angeben, die der ersten Speichersteuerung (500a) zugeordnet ist, Weiterleiten (506, COMa, COMb) der empfangenen Schreibanforderung an die erste Speichersteuerung (500a), wobei die erste Speichersteuerung (500a) das jeweilige erste Datensignal (IOa) erzeugt, das zum Übertragen der jeweiligen extrahierten Speicheradresse (ADRa) und der jeweiligen extrahierten Daten (DATA_INa) verwendet wird, und
- als Antwort auf das Bestimmen, dass die Schreibanforderung Daten umfasst, die eine Speicheradresse (ADRb) angeben, die der zweiten Speichersteuerung (500b) zugeordnet ist, Weiterleiten (506, COMa, COMb) der empfangenen Schreibanforderung an die zweite Speichersteuerung (500b), wobei die zweite Speichersteuerung (500b) das jeweilige zweite Datensignal (IOb) erzeugt, das zum Übertragen der jeweiligen extrahierten Speicheradresse (ADRb) und der jeweiligen extrahierten Daten (DATA_INb) verwendet wird,
- als Antwort auf das Empfangen einer Leseanforderung von dem Kommunikationssystem (52; 114):
- Bestimmen, ob die Leseanforderung Daten umfasst, die eine Speicheradresse (ADRa) angeben, die der ersten Speichersteuerung (500a) zugeordnet ist, oder Daten, die eine Speicheradresse (ADRb) angeben, die der zweiten Speichersteuerung (500b) zugeordnet ist,
- als Antwort auf das Bestimmen, dass die Leseanforderung Daten umfasst, die eine Speicheradresse (ADRa) angeben, die der ersten Speichersteuerung (500a) zugeordnet ist, Weiterleiten (506, COMa, COMb) der empfangenen Leseanforderung an die erste Speichersteuerung (500a), wobei die erste Speichersteuerung (500a) das jeweilige Datensignal (IOa) erzeugt, das zum Übertragen der jeweiligen extrahierten Speicheradresse (ADRa) verwendet wird, und die jeweiligen Daten (DATA_OUTa) empfängt, die der jeweiligen extrahierten Speicheradresse (ADRa) zugeordnet sind, und die erste Speichersteuerung (500a) die jeweilige Antwort erzeugt, die die jeweiligen empfangenen Daten (DATA_OUTa) umfasst,
- als Antwort auf das Bestimmen, dass die Leseanforderung Daten umfasst, die eine Speicheradresse (ADRb) angeben, die der zweiten Speichersteuerung (500b) zugeordnet ist, Weiterleiten (506, COMa, COMb) der empfangenen Leseanforderung an die zweite Speichersteuerung (500b), wobei die zweite Speichersteuerung (500b) das jeweilige Datensignal (IOb) erzeugt, das zum Übertragen der jeweiligen extrahierten Speicheradresse (ADRb) verwendet wird, und die jeweiligen Daten (DATA_OUTb) empfängt, die der jeweiligen extrahierten Speicheradresse (ADRb) zugeordnet sind, und die zweite Speichersteuerung (500a) die jeweilige Antwort erzeugt, die die jeweiligen empfangenen Daten (DATA_OUTb) umfasst.

5. Verarbeitungssystem nach einem der vorhergehenden Ansprüche, wobei der gemeinsame Kommunikationskanal (EXT1, EXT2) ein erstes Chip-Freigabesignal (CS1) umfasst, das dazu ausgelegt ist, einen ersten Speicher (42a) freizugeben, und ein zweites Chip-Freigabesignal (CS2), das dazu ausgelegt ist, einen zweiten Speicher (42b) freizugeben, und wobei die erste Speichersteuerung (500a) so konfiguriert ist, dass sie das erste Chip-Auswahlsignal (CS1) bei dem Übertragen oder Empfangen von Daten über das erste Datensignal (IOa) aktiviert, und die zweite Speichersteuerung (500b) so konfiguriert ist, dass sie das zweite Chip-Auswahlsignal (CS2) bei dem Übertragen oder Empfangen von Daten über das zweite Datensignal (IOb) aktiviert.

6. Verarbeitungssystem nach Anspruch 5, wobei der gemeinsame Kommunikationskanal (EXT1, EXT2) ein Serial Peripheral Interface (SPI)-Bus oder OctalSPI ist.

7. Verarbeitungssystem nach einem der vorhergehenden Ansprüche, wobei das Speichersteuerungs-Subsystem (50a) eine erste Fehlerkorrekturcode, ECC,-Schaltung (502a), die der ersten Speichersteuerung (500a) zugeordnet ist, und eine zweite ECC-Schaltung (502a) umfasst, die der zweiten Speichersteuerung (500b) zugeordnet ist, wobei jede der ersten Speichersteuerung (500a) und der zweiten Speichersteuerung (500b) für Folgendes konfiguriert ist:
- als Antwort auf das Empfangen einer Schreibanforderung:
- Berechnen von ECC-Bits über die jeweilige erste oder zweite ECC-Schaltung (502a, 502b),
- Übertragen der jeweiligen extrahierten Speicheradresse (ADRa, ADRb), der jeweiligen extrahierten Daten (DATA_INa, DATA_INb) und der jeweiligen berechneten ECC-Bits;
- als Antwort auf das Empfangen einer Leseanforderung:
- Übertragen der jeweiligen extrahierten Speicheradresse (ADRa, ADRb) und Empfangen der jeweiligen Daten (DATA_OUTa, DATA_OUTb) und der jeweiligen ECC-Bits;
- Berechnen weiterer ECC-Bits über die jeweilige erste oder zweite ECC-Schaltung (502a, 502b),
- Vergleichen der weiteren ECC-Bits mit den empfangenen ECC-Bits und als Antwort auf das Bestimmen, dass die weiteren ECC-Bits nicht den empfangenen ECC-Bits entsprechen, Aktivieren eines ECC-Fehlersignals (E1, E2, E3, E4).

8. Verarbeitungssystem nach Anspruch 7, wobei die erste und die zweite ECC-Schaltung (502a, 502b) Fehlererkennungs- und Korrekturschaltungen sind, die so konfiguriert sind, dass sie korrigierte Daten (DATA_OUTa, DATA_OUTb) erzeugen, und wobei die erste oder zweite Antwort die jeweiligen korrigierten Daten (DATA_OUTa, DATA_OUTb) umfasst.

9. Verarbeitungssystem nach Anspruch 7 oder 8, wobei die erste und die zweite ECC-Schaltung (502a, 502b) so konfiguriert sind, dass sie die jeweiligen ECC-Bits als Funktion der jeweiligen extrahierten Daten (DATA_INa, DATA_INb) oder empfangenen Daten (DATA_OUTa, DATA_OUTb) und der jeweiligen Speicheradresse (ADRa, ADRb) berechnen.

10. Verarbeitungssystem nach einem der vorhergehenden Ansprüche, wobei das Speichersteuerungs-Subsystem eine Steuerschaltung (510) umfasst, die so konfiguriert ist, dass sie Konfigurationsdaten (CD) empfängt und einen des ersten, des zweiten oder des dritten Betriebsmodus als Funktion der Konfigurationsdaten (CD) auswählt.

11. Betriebsverfahren für ein Verarbeitungssystem nach einem der vorhergehenden Ansprüche, das in einem ersten Betriebsmodus Folgendes umfasst:
- Verbinden (508) der ersten Speichersteuerung (500a) mit dem Kommunikationskanal (EXT1, EXT2), wobei das erste Datensignal (IOa) dem Datensignal (IO) entspricht,
- als Antwort auf das Empfangen einer Schreibanforderung von dem Kommunikationssystem (52; 114):
- Weiterleiten (506, COMa, COMb) der empfangenen Schreibanforderung an die erste Speichersteuerung (500a) und die zweite Speichersteuerung (500b), wobei die erste Speichersteuerung (500a) das jeweilige erste Datensignal (IOa) erzeugt, das zum Übertragen der jeweiligen extrahierten Speicheradresse (ADRa) und der jeweiligen extrahierten Daten (DATA_INa) verwendet wird, und die zweite Speichersteuerung (500b) das jeweilige zweite Datensignal (IOb) erzeugt, das zum Übertragen der jeweiligen extrahierten Speicheradresse (ADRb) und der jeweiligen extrahierten Daten (DATA_INb) verwendet wird;
- Vergleichen (5040) des ersten Datensignals (IOa) mit dem zweiten Datensignal (IOb) und als Antwort auf das Bestimmen, dass das erste Datensignal (IOa) nicht dem zweiten Datensignal (IOb) entspricht, Aktivieren eines ersten Fehlersignals (A1);
- als Antwort auf das Empfangen einer Leseanforderung von dem Kommunikationssystem (52; 114):
- Weiterleiten (506, COMa, COMb) der empfangenen Leseanforderung an die erste Speichersteuerung (500a) und die zweite Speichersteuerung (500b), wobei die erste Speichersteuerung (500a) das jeweilige erste Datensignal (IOa) erzeugt, das zum Übertragen der jeweiligen extrahierten Speicheradresse (ADRa) und zum Empfangen der jeweiligen Daten (DATA _OUTa), die der jeweiligen extrahierten Speicheradresse (ADRa) zugeordnet sind, verwendet wird, und die zweite Speichersteuerung (500b) das jeweilige zweite Datensignal (IOb) erzeugt, das zum Übertragen der jeweiligen extrahierten Speicheradresse (ADRb) und Empfangen der jeweiligen Daten (DATA_OUTb), die der jeweiligen extrahierten Speicheradresse (ADRb) zugeordnet sind, verwendet wird, und die erste Speichersteuerung (500a) die jeweilige Antwort erzeugt, die die jeweiligen empfangenen Daten (DATA_OUTa) umfasst, und die zweite Speichersteuerung (500b) die jeweilige Antwort erzeugt, die die jeweiligen empfangenen Daten (DATA_OUTb) umfasst;
- als Antwort auf das Bestimmen, dass die erste Speichersteuerung (500a) die extrahierte Speicheradresse (ADRa) über das erste Datensignal (IOa) überträgt, Vergleichen (5046) des ersten Datensignals (IOa) mit dem zweiten Datensignal (IOb) und als Antwort auf das Bestimmen, dass das erste Datensignal (IOa) nicht dem zweiten Datensignal (IOb) entspricht, Aktivieren eines zweiten Fehlersignals (A3);
- als Antwort auf das Bestimmen, dass die erste Speichersteuerung (500a) die jeweiligen Daten (DATA_OUTa) über das erste Datensignal (IOa) empfängt, Verbinden (5080) des ersten Datensignals (IOa) mit dem zweiten Datensignal (IOb), Vergleichen (5050) der von der ersten Speichersteuerung (500a) erzeugten ersten Antwort mit der von der zweiten Speichersteuerung (500b) erzeugten zweiten Antwort, und als Antwort auf das Bestimmen, dass die erste Antwort nicht der zweiten Antwort entspricht, Aktivieren eines dritten Fehlersignals (A5).

## Revendications

1. Système de traitement (10a) intégré dans un circuit intégré (40), ledit système de traitement (10a) comprenant :
- un système de communication (52 ; 114) ;
- un sous-système de contrôleur de mémoire (50a) configuré pour réaliser l'interface d'une mémoire (42a) externe par rapport audit circuit intégré (40) ;
- un circuit maître (54 ; 102, 110) configuré pour envoyer des demandes d'écriture et de lecture via ledit système de communication (52 ; 114) audit sous-système de contrôleur de mémoire (50a) pour enregistrer des données dans ladite mémoire (42a) et pour lire des données dans celle-ci ;
dans lequel ledit sous-système de contrôleur de mémoire (50a) est connecté audit système de communication (52 ; 114) et à un canal de communication (EXT1, EXT2) connecté à des bornes dudit circuit intégré (40) configurées pour être connectées à ladite mémoire (42a), dans lequel ledit canal de communication (EXT1, EXT2) comprend un signal de données (IO),
dans lequel ledit sous-système de contrôleur de mémoire (50a) comprend un premier contrôleur de mémoire (500a) et un deuxième contrôleur de mémoire (500b), chacun desdits premier contrôleur de mémoire (500a) et deuxième contrôleur de mémoire (500b) étant configuré pour :
- recevoir une demande d'écriture ou de lecture comprenant des données indiquant une adresse de mémoire (ADRa, ADRb) et, dans le cas d'une demande d'écriture, des données respectives (DATA_INa, DATA_INb) à enregistrer ;
- en réponse à la réception d'une demande d'écriture :
- extraire l'adresse de mémoire respective (ADRa, ADRb) et les données respectives à enregistrer (DATA_INa, DATA_INb) de la demande d'écriture, et
- générer une première ou deuxième communication respective (EXTa, EXTb) pour enregistrer les données extraites respectives (DATA_INa, DATA_INb) à l'adresse de mémoire extraite respective (ADRa, ADRb) en générant un premier ou deuxième signal de données respectif (IOa, IOb) utilisé pour transmettre l'adresse de mémoire extraite respective (ADRa, ADRb) et les données extraites respectives (DATA_INa, DATA_INb) ;
- en réponse à la réception d'une demande de lecture :
- extraire l'adresse de mémoire respective (ADRa, ADRb) de la demande de lecture,
- générer la première ou deuxième communication respective (EXTa, EXTb) pour recevoir des données (DATA_OUTa, DATA_OUTb) associées à ladite adresse de mémoire extraite (ADRa, ADRb) en générant le premier ou deuxième signal de données respectif (IOa, IOb) afin de transmettre l'adresse de mémoire extraite respective (ADRa, ADRb) et de recevoir les données respectives (DATA_OUTa, DATA_OUTb) associées à ladite adresse de mémoire extraite (ADRa, ADRb), et
- générer une première ou deuxième réponse respective comprenant les données reçues respectives (DATA_OUTa, DATA_OUTb) ;
dans lequel, dans un premier mode de fonctionnement, la première communication (EXTa) dudit premier contrôleur de mémoire (500a) est connectée (508) audit canal de communication (EXT1, EXT2), moyennant quoi ledit premier signal de données (IOa) correspond audit signal de données (IO), et ledit sous-système de contrôleur de mémoire (50a) est configuré pour :
- en réponse à la réception d'une demande d'écriture provenant dudit système de communication (52 ; 114) :
- transférer (506, COMa, COMb) ladite demande d'écriture reçue audit premier contrôleur de mémoire (500a) et audit deuxième contrôleur de mémoire (500b), après quoi ledit premier contrôleur de mémoire (500a) génère le premier signal de données respectif (IOa) utilisé pour transmettre l'adresse de mémoire extraite respective (ADRa) et les données extraites respectives (DATA_INa) et ledit deuxième contrôleur de mémoire (500b) génère le deuxième signal de données respectif (IOb) utilisé pour transmettre l'adresse de mémoire extraite respective (ADRb) et les données extraites respectives (DATA_INb) ;
- comparer (5040) ledit premier signal de données (IOa) avec ledit deuxième signal de données (IOb) et, s'il est déterminé que ledit premier signal de données (IOa) ne correspond pas audit deuxième signal de données (IOb), activer un premier signal d'erreur (A1) ;
- en réponse à la réception d'une demande de lecture provenant dudit système de communication (52 ; 114) :
- transférer (506, COMa, COMb) ladite demande d'écriture reçue audit premier contrôleur de mémoire (500a) et audit deuxième contrôleur de mémoire (500b), après quoi ledit premier contrôleur de mémoire (500a) génère le premier signal de données respectif (IOa) utilisé pour transmettre l'adresse de mémoire extraite respective (ADRa) et pour recevoir les données respectives (DATA_OUTa) associées à l'adresse de mémoire extraite respective (ADRa) et ledit deuxième contrôleur de mémoire (500b) génère le deuxième signal de données respectif (IOb) utilisé pour transmettre l'adresse de mémoire extraite respective (ADRb) et pour recevoir les données respectives (DATA_OUTb) associées à l'adresse de mémoire extraite respective (ADRb), et ledit premier contrôleur de mémoire (500a) génère la réponse respective comprenant les données reçues respectives (DATA_OUTa) et ledit deuxième contrôleur de mémoire (500b) génère la réponse respective comprenant les données reçues respectives (DATA_OUTb) ;
- s'il est déterminé que ledit premier contrôleur de mémoire (500a) transmet ladite adresse de mémoire extraite (ADRa) via ledit premier signal de données (IOa), comparer (5046) ledit premier signal de données (IOa) avec ledit deuxième signal de données (IOb) et, s'il est déterminé que ledit premier signal de données (IOa) ne correspond pas audit deuxième signal de données (IOb), activer un deuxième signal d'erreur (A3) ;
- s'il est déterminé que ledit premier contrôleur de mémoire (500a) reçoit les données respectives (DATA_OUTa) via ledit premier signal de données (IOa), connecter (5080) ledit premier signal de données (IOa) audit deuxième signal de données (IOb), comparer (5050) la première réponse générée par ledit premier contrôleur de mémoire (500a) avec la deuxième réponse générée par ledit deuxième contrôleur de mémoire (500b) et, s'il est déterminé que ladite première réponse ne correspond pas à ladite deuxième réponse, activer un troisième signal d'erreur (A5).

2. Système de traitement selon la revendication 1, dans lequel ledit canal de communication (EXT1, EXT2) est un canal de communication partagé, et dans lequel, dans un deuxième mode de fonctionnement, la première communication (EXTa) dudit premier contrôleur de mémoire (500a) et la deuxième communication (EXTb) dudit deuxième contrôleur de mémoire (500b) sont connectées (508) audit canal de communication (EXT1, EXT2), moyennant quoi ledit premier signal de données (IOa) et ledit deuxième signal de données (IOb) correspondent audit signal de données (IO), et ledit sous-système de contrôleur de mémoire (50a) est configuré pour :
- en réponse à la réception d'une demande d'écriture provenant dudit système de communication (52 ; 114) :
- sélectionner (5082) l'un desdits premier contrôleur de mémoire (500a) et deuxième contrôleur de mémoire (500b),
- transférer (506, COMa, COMb) la demande d'écriture reçue audit un contrôleur de mémoire (500a ; 500b), après quoi ledit un contrôleur de mémoire (500a ; 500a) génère le premier signal de données respectif (IOa ; IOb) utilisé pour transmettre l'adresse de mémoire extraite respective (ADRa ; ADRb) et les données extraites respectives (DATA_INa ; DATA_INb),
- sélectionner (5082) l'autre desdits premier contrôleur de mémoire (500a) et deuxième contrôleur de mémoire (500b),
- transférer (506, COMa, COMb) la demande d'écriture reçue audit autre contrôleur de mémoire (500a ; 500b), après quoi ledit autre contrôleur de mémoire (500a ; 500a) génère le premier signal de données respectif (IOa ; IOb) utilisé pour transmettre l'adresse de mémoire extraite respective (ADRa ; ADRb) et les données extraites respectives (DATA_INa ; DA T A_INb) ;
- en réponse à la réception d'une demande de lecture provenant dudit système de communication (52 ; 114) :
- sélectionner (5082) l'un desdits premier contrôleur de mémoire (500a) et deuxième contrôleur de mémoire (500b),
- transférer (506, COMa, COMb) ladite demande de lecture reçue audit un contrôleur de mémoire (500a ; 500b), après quoi ledit un contrôleur de mémoire (500a ; 500a) génère le signal de données respectif (IOa ; IOb) utilisé pour transmettre l'adresse de mémoire extraite respective (ADRa ; ADRb) et reçoit les données respectives (DATA_OUTa ; DATA_OUTb) associées à l'adresse de mémoire extraite respective (ADRa ; ADRb), et ledit un contrôleur de mémoire (500a ; 500a) génère la réponse respective comprenant les données reçues respectives (DATA_OUTa ; DATA_OUTb),
- sélectionner (5082) l'autre desdits premier contrôleur de mémoire (500a) et deuxième contrôleur de mémoire (500b),
- transférer (506, COMa, COMb) ladite demande de lecture reçue audit autre contrôleur de mémoire (500a ; 500b), après quoi ledit autre contrôleur de mémoire (500a ; 500a) génère le signal de données respectif (IOa ; IOb) utilisé pour transmettre l'adresse de mémoire extraite respective (ADRa ; ADRb) et reçoit les données respectives (DATA_OUTa ; DATA_OUTb) associées à l'adresse de mémoire extraite respective (ADRa ; ADRb), et ledit autre contrôleur de mémoire (500a ; 500a) génère la réponse respective comprenant les données reçues respectives (DATA_OUTa ; DATA_OUTb),
- comparer (5060) la première réponse générée par ledit premier contrôleur de mémoire (500a) avec la deuxième réponse générée par ledit deuxième contrôleur de mémoire (500b) et, s'il est déterminé que ladite première réponse ne correspond pas à ladite deuxième réponse, activer un quatrième signal d'erreur (A7).

3. Système de traitement selon la revendication 1 ou 2, dans lequel lesdites première et deuxième réponses comprennent des premier et deuxième signaux de commande de réponse respectifs (CRESa, CRESb) et dans lequel, dans ledit premier mode de fonctionnement et/ou ledit deuxième mode de fonctionnement, ledit sous-système de contrôleur de mémoire (50a) est configuré pour comparer (5042, 5048, 5056, 5058) les premiers signaux de commande de réponse (CRESa) générés par ledit premier contrôleur de mémoire (500a) avec les deuxièmes signaux de commande de réponse (CRESb) générés par ledit deuxième contrôleur de mémoire (500b) et, s'il est déterminé que lesdits premiers signaux de commande de réponse (CRESa) ne correspondent pas auxdits deuxièmes signaux de commande de réponse (CRESb), activer un cinquième signal d'erreur (A2, A4, ERR4, A6).

4. Système de traitement selon l'une quelconque des revendications précédentes, dans lequel ledit canal de communication (EXT1, EXT2) est un canal de communication partagé, et dans lequel, dans un troisième mode de fonctionnement, la première communication (EXTa) dudit premier contrôleur de mémoire (500a) et la deuxième communication (EXTb) dudit deuxième contrôleur de mémoire (500b) sont connectées (508) audit canal de communication (EXT1, EXT2), moyennant quoi ledit premier signal de données (IOa) et ledit deuxième signal de données (IOb) correspondent audit signal de données (IO), et ledit sous-système de contrôleur de mémoire (50a) est configuré pour :
- en réponse à la réception d'une demande d'écriture provenant dudit système de communication (52 ; 114) :
- déterminer si la demande d'écriture comprend des données indiquant une adresse de mémoire (ADRa) associée audit premier contrôleur de mémoire (500a) ou des données indiquant une adresse de mémoire (ADRb) associée audit deuxième contrôleur de mémoire (500b),
- s'il est déterminé que la demande d'écriture comprend des données indiquant une adresse de mémoire (ADRa) associée audit premier contrôleur de mémoire (500a), transférer (506, COMa, COMb) la demande d'écriture reçue audit premier contrôleur de mémoire (500a), après quoi ledit premier contrôleur de mémoire (500a) génère le premier signal de données respectif (IOa) utilisé pour transmettre l'adresse de mémoire extraite respective (ADRa) et les données extraites respectives (DATA_INa), et
- s'il est déterminé que la demande d'écriture comprend des données indiquant une adresse de mémoire (ADRb) associée audit deuxième contrôleur de mémoire (500b), transférer (506, COMa, COMb) la demande d'écriture reçue audit deuxième contrôleur de mémoire (500b), après quoi ledit deuxième contrôleur de mémoire (500b) génère le deuxième signal de données respectif (IOb) utilisé pour transmettre l'adresse de mémoire extraite respective (ADRb) et les données extraites respectives (DATA_INb),
- en réponse à la réception d'une demande de lecture provenant dudit système de communication (52 ; 114) :
- déterminer si la demande de lecture comprend des données indiquant une adresse de mémoire (ADRa) associée audit premier contrôleur de mémoire (500a) ou des données indiquant une adresse de mémoire (ADRb) associée audit deuxième contrôleur de mémoire (500b),
- s'il est déterminé que la demande de lecture comprend des données indiquant une adresse de mémoire (ADRa) associée audit premier contrôleur de mémoire (500a), transférer (506, COMa, COMb) ladite demande de lecture reçue audit premier contrôleur de mémoire (500a), après quoi ledit premier contrôleur de mémoire (500a) génère le signal de données respectif (IOa) utilisé pour transmettre l'adresse de mémoire extraite respective (ADRa) et reçoit les données respectives (DATA_OUTa) associées à l'adresse de mémoire extraite respective (ADRa), et ledit premier contrôleur de mémoire (500a) génère la réponse respective comprenant les données reçues respectives (DATA_OUTa),
- s'il est déterminé que la demande de lecture comprend des données indiquant une adresse de mémoire (ADRb) associée audit deuxième contrôleur de mémoire (500b), transférer (506, COMa, COMb) ladite demande de lecture reçue audit deuxième contrôleur de mémoire (500b), après quoi ledit deuxième contrôleur de mémoire (500b) génère le signal de données respectif (IOb) utilisé pour transmettre l'adresse de mémoire extraite respective (ADRb) et reçoit les données respectives (DATA _OUTb) associées à l'adresse de mémoire extraite respective (ADRb), et ledit deuxième contrôleur de mémoire (500a) génère la réponse respective comprenant les données reçues respectives (DATA_OUTb).

5. Système de traitement selon l'une quelconque des revendications précédentes, dans lequel ledit canal de communication partagé (EXT1, EXT2) comprend un premier signal de validation de puce (CS1) adapté pour valider une première mémoire (42a) et un deuxième signal de validation de puce (CS2) adapté pour valider une deuxième mémoire (42b), et dans lequel ledit premier contrôleur de mémoire (500a) est configuré pour activer ledit premier signal de sélection de puce (CS1) lors de la transmission ou réception de données via ledit premier signal de données (IOa) et ledit deuxième contrôleur de mémoire (500b) est configuré pour activer ledit deuxième signal de sélection de puce (CS2) lors de la transmission ou réception de données via ledit deuxième signal de données (IOb).

6. Système de traitement selon la revendication 5, dans lequel ledit canal de communication partagé (EXT1, EXT2) est un bus d'interface périphérique série (SPI) ou OctalSPI.

7. Système de traitement selon l'une quelconque des revendications précédentes, dans lequel ledit sous-système de contrôleur de mémoire (50a) comprend un premier circuit de Code de Correction d'Erreurs, ECC, (502a) associé audit premier contrôleur de mémoire (500a) et un deuxième circuit ECC (502a) associé audit deuxième contrôleur de mémoire (500b), dans lequel chacun desdits premier contrôleur de mémoire (500a) et deuxième contrôleur de mémoire (500b) est configuré pour :
- en réponse à la réception d'une demande d'écriture :
- calculer via le premier ou deuxième circuit ECC respectif (502a, 502b) des bits ECC,
- transmettre l'adresse de mémoire extraite respective (ADRa, ADRb), les données extraites respectives (DATA_INa, DATA_INb) et les bits ECC calculés respectifs ;
- en réponse à la réception d'une demande de lecture :
- transmettre l'adresse de mémoire extraite respective (ADRa, ADRb) et recevoir les données respectives (DATA_OUTa, DATA_OUTb) et les bits ECC respectifs ;
- calculer via le premier ou deuxième circuit ECC respectif (502a, 502b) des bits ECC supplémentaires,
- comparer les bits ECC supplémentaires avec les bits ECC reçus et, s'il est déterminé que les bits ECC supplémentaires ne correspondent pas aux bits ECC reçus, activer un signal d'erreur ECC (E1, E2, E3, E4).

8. Système de traitement selon la revendication 7, dans lequel lesdits premier et deuxième circuits ECC (502a, 502b) sont des circuits de détection et de correction d'erreurs configurés pour générer des données corrigées (DATA_OUTa, DATA_OUTb), et dans lequel ladite première ou deuxième réponse comprend les données corrigées respectives (DATA_OUTa, DATA_OUTb).

9. Système de traitement selon la revendication 7 ou 8, dans lequel lesdits premier et deuxième circuits ECC (502a, 502b) sont configurés pour calculer les bits ECC respectifs en fonction des données extraites respectives (DATA_INa, DATA_INb) ou des données reçues (DATA_OUTa, DATA_OUTb) et de l'adresse de mémoire respective (ADRa, ADRb).

10. Système de traitement selon l'une quelconque des revendications précédentes, dans lequel ledit sous-système de contrôleur de mémoire comprend un circuit de commande (510) configuré pour recevoir des données de configuration (CD) et pour sélectionner l'un desdits premier, deuxième et troisième modes de fonctionnement en fonction desdites données de configuration (CD).

11. Procédé de mise en œuvre d'un système de traitement selon l'une quelconque des revendications précédentes, comprenant, dans un premier mode de fonctionnement, les étapes suivantes :
- connecter (508) ledit premier contrôleur de mémoire (500a) audit canal de communication (EXT1, EXT2), moyennant quoi ledit premier signal de données (IOa) correspond audit signal de données (IO),
- en réponse à la réception d'une demande d'écriture provenant dudit système de communication (52 ; 114) :
- transférer (506, COMa, COMb) la demande d'écriture reçue au premier contrôleur de mémoire (500a) et au deuxième contrôleur de mémoire (500b), après quoi le premier contrôleur de mémoire (500a) génère le premier signal de données respectif (IOa) utilisé pour transmettre l'adresse de mémoire extraite respective (ADRa) et les données extraites respectives (DATA_INa) et le deuxième contrôleur de mémoire (500b) génère le deuxième signal de données respectif (IOb) utilisé pour transmettre l'adresse de mémoire extraite respective (ADRb) et les données extraites respectives (DATA_INb) ;
- comparer (5040) le premier signal de données (IOa) avec le deuxième signal de données (IOb) et, s'il est déterminé que ledit premier signal de données (IOa) ne correspond pas audit deuxième signal de données (IOb), activer un premier signal d'erreur (A1) ;
- en réponse à la réception d'une demande de lecture provenant dudit système de communication (52 ; 114) :
- transférer (506, COMa, COMb) la demande de lecture reçue au premier contrôleur de mémoire (500a) et au deuxième contrôleur de mémoire (500b), après quoi le premier contrôleur de mémoire (500a) génère le premier signal de données respectif (IOa) utilisé pour transmettre l'adresse de mémoire extraite respective (ADRa) et pour recevoir les données respectives (DATA_OUTa) associées à l'adresse de mémoire extraite respective (ADRa) et le deuxième contrôleur de mémoire (500b) génère le deuxième signal de données respectif (IOb) utilisé pour transmettre l'adresse de mémoire extraite respective (ADRb) et pour recevoir les données respectives (DATA_OUTb) associées à l'adresse de mémoire extraite respective (ADRb), et le premier contrôleur de mémoire (500a) génère la réponse respective comprenant les données reçues respectives (DATA_OUTa) et le deuxième contrôleur de mémoire (500b) génère la réponse respective comprenant les données reçues respectives (DATA_OUTb) ;
- s'il est déterminé que le premier contrôleur de mémoire (500a) transmet l'adresse de mémoire extraite (ADRa) via le premier signal de données (IOa), comparer (5046) le premier signal de données (IOa) avec le deuxième signal de données (IOb) et, s'il est déterminé que ledit premier signal de données (IOa) ne correspond pas audit deuxième signal de données (IOb), activer un deuxième signal d'erreur (A3) ;
- s'il est déterminé que le premier contrôleur de mémoire (500a) reçoit les données respectives (DATA_OUTa) via le premier signal de données (IOa), connecter (5080) le premier signal de données (IOa) au deuxième signal de données (IOb), comparer (5050) la première réponse générée par le premier contrôleur de mémoire (500a) avec la deuxième réponse générée par le deuxième contrôleur de mémoire (500b) et, s'il est déterminé que ladite première réponse ne correspond pas à ladite deuxième réponse, activer un troisième signal d'erreur (A5).
